Europäisches Patentamt

European Patent Office

Office européen des brevets

(19)

(11) EP 0 573 656 B1

(12) **EUROPEAN PATENT SPECIFICATION**

(45) Date of publication and mention
of the grant of the patent:
**20.02.2002 Bulletin 2002/08**

(21) Application number: **92923987.9**

(22) Date of filing: **20.11.1992**

(51) Int Cl.7: **D03D 51/00**, G05B 13/02

(86) International application number:
**PCT/JP92/01515**

(87) International publication number:
**WO 93/10296 (27.05.1993 Gazette 1993/13)**

(54) **CONTROL DEVICE IN LOOM**

Kontrollvorrichtung für Webmaschinen

DISPOSITIF DE COMMANDE DANS UN METIER A TISSER

(84) Designated Contracting States:
**BE**

(30) Priority: **22.11.1991 JP 30771491**
**24.12.1991 JP 34090891**
**24.12.1991 JP 34090991**
**05.10.1992 JP 26523792**

(43) Date of publication of application:
**15.12.1993 Bulletin 1993/50**

(73) Proprietor: **Kabushiki Kaisha Toyota Jidoshokki**
**Kariya-shi, Aichi-ken (JP)**

(72) Inventors:
• **ARA, Mitsuhiro**
**Tokyo 167 (JP)**
• **IMAMURA, Shuichiro**
**Hachioji-shi, Tokyo 192-03 (JP)**

(74) Representative:
**Grünecker, Kinkeldey, Stockmair &**
**Schwanhäusser Anwaltssozietät**
**Maximilianstrasse 58**
**80538 München (DE)**

(56) References cited:
**EP-A- 0 403 175**          **JP-A- 1 177 603**
**JP-A- 1 239 138**          **JP-A- 2 210 044**
**JP-A- 2 213 943**          **JP-A- 2 268 380**
**JP-A- 4 065 556**          **JP-A- 60 151 347**
**JP-A- 61 239 057**          **JP-A- 64 015 830**

• **DATABASE WPI Week 9116 Derwent**
**Publications Ltd., London, GB; AN 84-216160 &**
**JP-A-59 125 941 (TSUDAKOMA) , 20 July 1984**

**Description**

FIELD OF THE INVENTION

This invention relates to a control system for weft picking or the like in a loom, and more particularly to the control system of a loom, using a neural network.

BACKGROUND TECHNIQUE

An example disclosed in Japanese Patent Provisional Publication No. 3-21653 has been proposed as a conventional control system of a loom, particularly as a weft picking control system of a fluid jet loom.

This example is intended to omit troublesome adjustment by a skilled operator and arranged as follows A suitable fluid ejection pattern (including fluid ejection amount, fluid speed and the like of a weft picking nozzle) is selected from a plurality of patterns which are memorized in accordance with input data of weaving conditions (including weft yarn kind, weaving width, loom revolution speed and the like) and set The thus set fluid ejection pattern is corrected in accordance with a weft yarn reaching timing to a counter-weft picking side after the loom is operated under the above set fluid ejection pattern.

However, this system is of the table look-up type wherein a plurality of fluid ejection patterns have beer previously fixed, and therefore setting data of massive patterns are required to make an accurate weft picking; however, the number of set data is unavoidably limited. Setting cannot be made in a manner other than that of the memorized patterns. Accordingly, there is the possibility that the weft picking cannot be precisely carried out.

In view of this, the pattern data are corrected in accordance with the weft yarn reaching timing to the counter-weft picking side after being set. However, there is a case an optimum weft yarn reaching timing is different according to the condition of kind of yarn or the like, and therefore in practice a precise adjustment as being made by the skilled operator has not yet been achieved.

Additionally, the above is common to general control of the loom in addition to the weft picking control.

Thus, it is the object of the present invention to provide a control system of a loom which can always set a control amount of a control object of the loom at an optimum value for any weaving condition and which predict a weft picking trouble which may occur in the future, from the present state of a weft yarn, for each of factors of the trouble thereby rendering possible to make warning and/or control.

This object is solved by the system as claimed in independent claim 1 and by the method as claimed in independent claim 17. Preferred embodiments of the invention are subject-matters of dependent claims.

A control system for a loom, according to the present invention is provided with a neural network control means which is arranged to input thereto a plurality of parameters and to output therefrom a calculated result depending upon the sum total of products each of which is of each input and a weight.

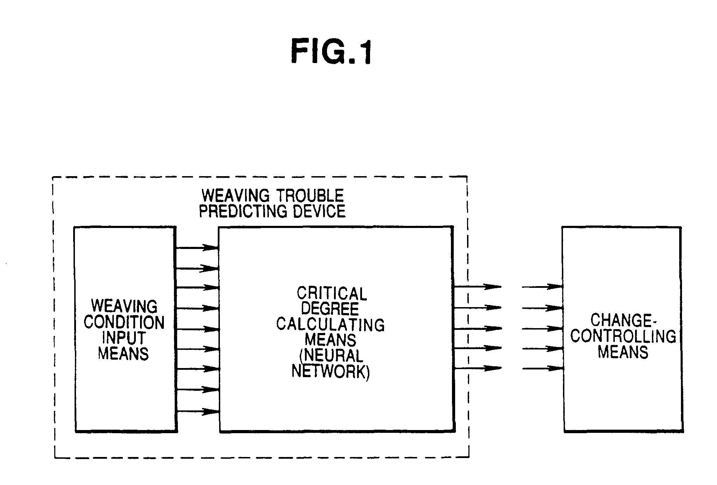

As shown in Fig. 1, the first embodiment of the present invention provides a weaving trouble predicting device for a loom, comprising weaving condition input means for converting a plurality of parameters representing a weaving condition of the loom (including a weaving condition, a weft yarn flying condition and the like) respectively to numerical values; and critical degree calculating means for calculating a critical degree of trouble occurrence in accordance with the sum total of products each of which is of each parameter and a weight, for each predetermined weaving trouble factor, by using a neural network.

Additionally, as shown in the same figure, the above-mentioned first embodiment provides a control system for a loom, comprising change-controlling means for controlling to change the weaving condition of the loom in accordance with a calculated value of the critical degree of the trouble occurrence, by using the above-mentioned weaving trouble predicting device.

The above-mentioned weaving trouble predicting device is arranged to classify weaving conditions of the loom and to learn the correspondency between classified patterns and weaving trouble factors by using the neural network. By this, a present weaving condition can be automatically judged while predicting trouble factors which may occur in the future, from the present weaving condition.

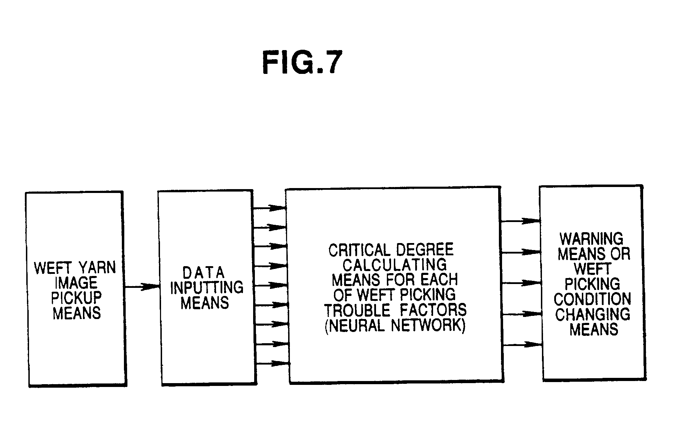

A second embodiment of the present invention comprises means for picking up the image of a weft yarn during a weft picking to obtain a weft yarn image, means for extracting a plurality of data from this weft yarn image and for inputting them to a neural network, means for calculating a critical degree of occurrence of a trouble for each of predetermined weft picking trouble factors, in accordance with the sum total of products each of which is of the input value of each data and a weight, and means for making a warning or a change of weft picking condition in accordance with these calculated values, as shown in Fig. 7.

In the above-mentioned arrangement, the image of the weft yarn during the weft picking is picked up to obtain the weft yarn image. The weft picking condition is judged from the flight form or behavior of the weft yarn in accordance with this weft yarn image. By this, the condition of the weft yarn is recognized as an image and therefore precisely gotten, thereby making a warning or a control (change of the weft picking condition).

Additionally, by using the neural network for judgment of the weft picking condition, the flight form or the like is classified depending upon the weft yarn image by the neural network. By learning the correspondency between these classified patterns and weft picking trouble factors, the critical degree of trouble occurrence for each weft picking trouble factor is calculated depending upon the present flight form of the weft yarn, and a weft picking trouble which may occur in the future is predicted for each factor. Then, a warning or a control (change of weft picking condition) is accomplished in accordance with this prediction.

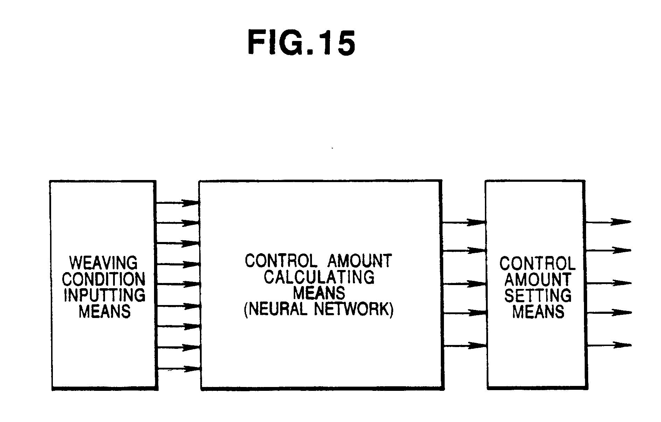

A third embodiment of the present invention provides a control system of a loom, comprising means for converting a plurality of parameters representing a weaving condition of the loom respectively to numerical values, means for calculating a control amount in accordance with the sum total of products each of which is of each parameter and a weight, for each predetermined control object of the loom, by a neural network, and means for setting the control amount of each control object in accordance with each calculated value of this control amount, as shown in Fig. 15.

In the above-mentioned system, by using the neural network, the weaving condition of the loom is classified, and learning is made on the correspondency (rule) between the classified conditions and optimum control amounts. By this, the optimum control amounts are calculated in accordance with the present weaving condition and set. Thus, setting is not made upon referring to a previously memorized pattern but is made upon calculation, and therefore a setting can be made precisely as same as that by a skilled operator.

A fourth embodiment of the present invention is in corporation with a fluid jet loom which is arranged as follows: A weft yarn is threaded from a weft measuring and storing device into a weft picking nozzle. The weft picking nozzle ejects fluid under a preset weft picking condition. The weft yarn is picked into a warp yarn shed opening under the influence of this ejected fluid. This picked weft yarn is woven in warp yarns by beating-up operation of a reed and by shedding action of the warp yarns. The embodiment comprises means for detecting the behavior of the weft yarn during a time between a timing at which the weft yarn is picked into the warp yarn shed opening and a timing at which the weft yarn is woven in the warp yarns, and judging means for comparing wave-form data of an output signal from the detecting means with preset normal wave-form data and for judging from this comparison result as to whether a fabric defect occurs or not.

With the above arrangement, the behavior of the weft yarn is detected until the weft yarn is woven in the warp yarns after reaching the counter-weft picking side. The judging means compares the wave-form data of the output signal from the detecting means with the preset normal wave-form data. In accordance with this comparison result, a judgment is made as to whether the fabric defect occurs or not.

BRIEF DESCRIPTION OF DRAWINGS

Fig. 1 is a functional block diagram showing an arrangement of a first embodiment of the present invention.
Fig. 2 is a system view of a weft picking control system showing the first embodiment of the present invention.
Fig. 3 is a view showing a neural network for trouble prediction.
Fig. 4 is a flowchart showing the procedure of learning.
Fig. 5 is a flowchart in case of using the embodiment as a warning device.
Fig. 6 is a flowchart in case of using the embodiment as a control system of a loom.
Fig. 7 is a functional block diagram showing an arrangement of a second embodiment of the present invention.
Fig. 8 is a system view of a weft picking system showing the second embodiment of the present invention.
Fig. 9 is a view showing an image processing method for a weft yarn image.
Fig. 10 is a view showing a neural network for trouble prediction.
Fig. 11 is a view illustrating the relationship between a flight form of a weft yarn and a weft picking trouble.
Fig. 12 is a flowchart showing the procedure of learning.
Fig. 13 is a flowchart in case of using the embodiment as a warning device.
Fig. 14 is a flowchart in case of using the embodiment as a weft picking control system.
Fig. 15 is a functional block diagram showing an arrangement of a third embodiment of the present invention.
Fig. 16 is a system view of a weft picking control system showing a third embodiment of the present invention.
Fig. 17 is a view showing a neural network for calculation of control amount.
Fig. 18 is a flowchart showing the procedure of learning.
Fig. 19 is an arrangement view showing a fourth embodiment of the present invention.
Fig. 20 is a model view showing a neural network of the fourth embodiment.
Fig. 21 shows detected wave-form data, in which (A) indicates a wave-form in a normal state, and (B) indicates a wave-form in a state where a kinky state occurs.

THE BEST MODE FOR CARRYING OUT THE INVENTION

Hereinafter, an example for predicting occurrence of a weft picking trouble and for warning and/or making a weft picking control in accordance with the prediction will be discussed as a first embodiment of the present invention.

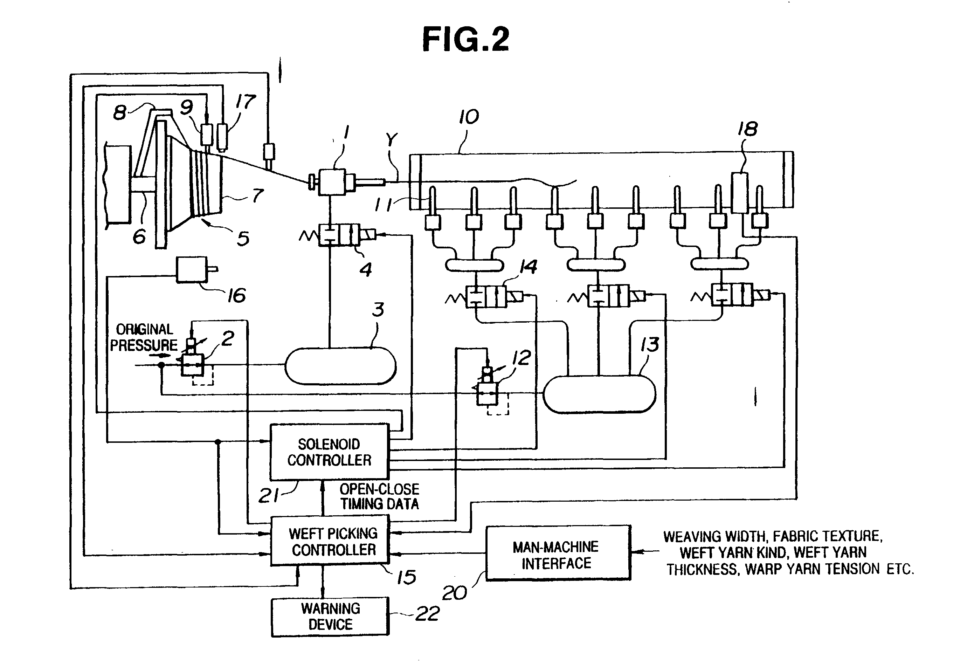

Referring to Fig. 2, a main nozzle 1 forming part of a loom (not shown) is adapted to make a weft picking for a weft yarn Y under the ejection of air, and supplied with air from a pressurized air supply source (not shown) through an electricity-air proportional valve 2, a surge tank 3 and an electromagnetic open-close valve 4. Accordingly, the ejection pressure (a pressure of air to be supplied to the main nozzle 1) of the main nozzle 1 is controllable by controlling a voltage to be supplied to the electricity-air proportional valve 2, in which the ejection initiation timing and ejection termination timing of the main nozzle 1 is controlled by the electromagnetic open-close valve 4.

The weft yarn Y is drawn out from a yarn supply body (not shown) and introduced to the main nozzle 1 through a weft measuring and storing device 5.

The weft measuring and storing device 5 includes a drum 7 relatively movably supported on the tip end section of a hollow rotatable shaft 6 which is rotatingly driven by a motor (not shown) so that the drum 7 is maintained stationary; a winding arm 8 which obliquely projects from and be in communication with the hollow rotatable shaft 6; and a solenoid driven type measuring pin (nail) 9 which is projected in or withdrawn from a hole formed on the peripheral surface of the drum 7. The weft measuring and storing device 5 is arranged to wind the weft yarn Y on the drum 7 under the rotation of the winding arm 8 upon the weft yarn Y being engaged with the measuring pin 9 in its projected condition thereby accomplishing a measuring and storing. When a predetermined pin withdrawal timing (a weft picking initiation timing) has been reached, the measuring pin 9 is withdrawn from the hole, upon which the weft yarn Y on the drum 7 is drawn out under the air ejection of the main nozzle 1 thereby accomplishing a weft picking.

The weft yarn Y ejected from the main nozzle 1 flies through a weft guide passage (not shown) formed by a row of groove sections each of which is formed in a reed blade of a reed 10, in which the weft yarn Y is wafted in relay by auxiliary nozzles 11 disposed at predetermined intervals thus accomplishing the weft picking.

The auxiliary nozzles 11 are grouped in such a manner that each group has several (three in the figure) auxiliary nozzles. The auxiliary nozzles 11 are respectively supplied with air through the electromagnetic open-close valve 14 from a surge tank 13 which is connected through an electricity-air proportional valve 12. Accordingly, the ejection pressure (an air pressure to be supplied to the auxiliary nozzle 11) of the auxiliary nozzle 11 is controllable by controlling a voltage to be supplied to the electricity-air proportional valve 12. The ejection initiation timing and ejection termination timing of the auxiliary nozzle 11 is controlled by the electromagnetic open-close valve 14.

To a weft picking controller 15 including a microcomputer, a signal from a loom angle sensor 16 and a signal from a weft unwinding sensor 17 are input as control inputs.

The angle sensor 16 is adapted to output the signal corresponding to a rotational angle (referred hereinafter to as "loom main shaft angle") of the loom main shaft.

The weft unwinding sensor 17 is adapted to detect the passage of the weft yarn Y unwound from the periphery of the drum 7 during the weft picking, at a location near the drum 7. A weft unwinding signal due to the passage of the weft yarn Y is produced every one unwinding of the weft yarn Y, so that the weft unwinding signal is produced n times until the weft picking terminates on the assumption that the amount of one pick corresponds to n turns of the weft yarn Y around the drum 7.

To the weft picking controller 15, signals respectively from a weft reaching sensor 18 and a weft tension sensor 19 are input in addition to the above signals in order to accomplish a prediction of weft picking trouble as discussed after.

The weft reaching sensor 18 is adapted to detect the reaching of the picked weft yarn Y at a counter-weft picking side on the weft guide passage.

The weft tension sensor 19 is adapted to detect the tension of the weft yarn Y at a location between the drum 7 and the main nozzle 1.

Additionally, a man-machine interface 20 is connected to the weft picking controller 15 and adapted such that a weaving width, a fabric texture , a weft yarn kind, a weft yarn thickness, a warp yarn tension and the like can be input thereto by a man in order to accomplish the prediction of weft picking trouble as discussed after.

Here, the weft picking controller 15 executes a predetermined calculation processing under the action of the microcomputer included therein, so as to determine an ejection pressure $P_M$ of the main nozzle 1 and an ejection pressure $P_S$ of the auxiliary nozzle 11, control the ejection pressure of the main nozzle 1 through the electricity-air proportional valve 2, and control the ejection pressure of the auxiliary nozzle 14 through the electricity-air proportional valve 12.

Additionally, the weft picking controller 15 determines an ejection initiation timing $T_{MO}$ and an ejection termination timing $T_{MC}$ of the main nozzle 1, a pin withdrawal timing $T_{CO}$ of the measuring pin 9, an ejection initiation timing $T_{SO}$ and an ejection termination timing $T_{SC}$ of each group of the auxiliary nozzles 11, and sets these opening and closing timing data at a solenoid controller 21.

The solenoid controller 21 controls the ejection timings of the main nozzle 1 through the electromagnetic open-close valve 4, the operation of the solenoid operated type measuring pin 9, and the ejection timings of the auxiliary nozzle 11 through the electromagnetic open-close valve 14, upon watching the loom main shaft angle in accordance with the signal of the loom angle sensor 16.

That is, when the loom main shaft angle has been reached the ejection initiation timing $T_{MO}$, the electromagnetic open-close valve 4 is switched ON (opened) thereby initiating the air ejection of the main nozzle 1.

Subsequently, when the pin withdrawal timing (or the weft picking initiation timing) has been reached, the solenoid is switched ON to withdraw the measuring pin 9 thereby initiating the weft picking.

During the weft picking, in order to make air ejection from the group of the auxiliary nozzles 11 at the location of the flying weft yarn Y along with the flight of the tip end of the weft yarn Y, the electromagnetic open-close valve 14 is switched ON (opened) to initiate the air ejection from the auxiliary nozzles 11 of each group when the loom main shaft angle has been reached the ejection initiation timing TSO. When the ejection termination timing TSC has been reached, the electromagnetic open-close valve 14 is switched OFF (closed) thereby terminating the air ejection of the auxiliary nozzles 11.

Next, when the ejection termination timing TMC has been reached, the electromagnetic open-close valve 4 is switched OFF (closed) thereby terminating the air ejection of the main nozzle 1.

The control of the projection timing (into the hole) of the measuring pin 9 is achieved upon watching the weft unwinding signal from the weft unwinding sensor 17, in which the solenoid is switched OFF to project the measuring pin 9 into the hole when the unwinding signal for the n-th turn has come from the weft unwinding sensor 17. By this, when the weft picking in an amount corresponding to the n turns has been completed, the weft yarn Y is brought into engagement with the measuring pin 9 so that the weft picking is completed.

To the weft picking controller 15, a warning device 22 such as a CRT display or a warning light of multiple color indication type is connected to make a warning depending upon a predicted result of weft picking trouble as discussed later.

Next, a discussion will be made on a predicting device for weaving troubles (weft picking troubles in this instance) according to the present invention.

The predicting device is constituted of the microcomputer in the weft picking controller 15, and arranged such that a plurality of parameters representing a weaving condition of the loom are respectively converted to numerical values and are input to the predicting device; and then a critical degree of trouble occurrence is calculated in accordance with the sum total of the products each of which is of an input value and a weight (coefficient of coupling) in each parameter, for each predetermined weft picking trouble factor, by a neural network and is output from the predicting device.

Here, as the weft picking trouble factors, six states such as "good state (no trouble)", "weft breakage upon air ejection" "faulty shedding operation", "weft breakage at the base", "weft yarn tip end entangled", and "kinky state of weft yarn" are used. The critical degree of each state is calculated.

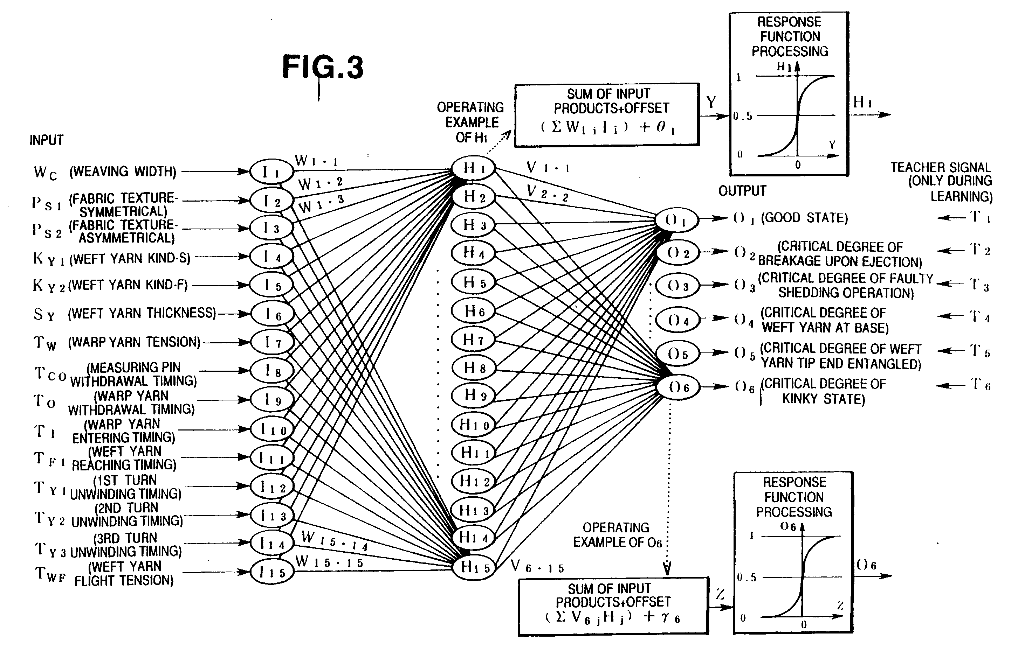

Fig. 3 shows a trouble predicting neural network which uses a hierarchical network including three layers such as an "input layer", an "intermediate layer", and an "output layer".

To 15 units ($I_1$ to $I_{15}$) in the input layer, the following items are respectively input upon being converted to numerical values: a weaving width $W_C$, a fabric texture - symmetrical (bewteen right and reverse sides) $P_{S1}$, a fabric texture - asymmetrical $P_{S2}$, a kind of weft yarn - spun yarn $K_{Y1}$, a kind of weft yarn - filament yarn $K_{Y2}$, a weft yarn thickness $S_Y$, a warp yarn tension $T_W$, a measuring pin withdrawal timing $T_{CO}$, a warp yarn withdrawal timing $T_O$, a warp yarn entry timing $T_I$, a weft yarn reaching (to the counter-weft picking side) timing $T_{F1}$, a 1st turn unwinding timing $T_{Y1}$, a 2nd turn unwinding timing $T_{Y2}$, a 3rd turn unwinding timing $T_{Y3}$ (,..., n-th turn unwinding timing $T_{Yn}$), and a weft yarn flight tension $T_{WF}$.

Here, the weaving width $W_C$ is input, for example, in millimeter as a unit by a man. The fabric texture: symmetrical $P_{S1}$ is, for example, $P_{S1} = 1$ if symmetrical, and $P_{S1} = 0$ if asymmetrical. The fabric texture: asymmetrical $P_{S2}$ is, for example, $P_{S2} = 1$ if asymmetrical, and $P_{S2} = 0$ if symmetrical. The fabric textures are input by a man. The kind of weft yarn - spun yarn $K_{Y1}$ is, for example, $K_{Y1} = 1$ if spun yarn is used, and $K_{Y1} = 0$ if other yarns are used. The kind of weft yarn - filament yarn $K_{Y2}$ is $K_{Y2} = 1$ if filament yarn is used, and $K_{Y2} = 0$ if other yarns are used. Each of the kind of weft yarn is input by a man. The weft yarn thickness $S_Y$ is input in denier as unit by a man; however, a sensor in a yarn supply section may be used. The warp yarn tension $T_W$ is input by a man; however, a sensor in a back-rest roller section may be used. As the measuring pin withdrawal timing $T_{CO}$, the present set value is input. The warp yarn withdrawal timing $T_O$ and the warp yarn entry timing $T_I$ represent respectively a timing at which the weft guide passage formed in the reed is withdrawn from a warp shed and a timing at which the weft guide passage enters the warp shed, in which a time duration (depending upon a shedding characteristics) in which a weft picking is possible can be known from the two timings. The two timings are input by a man; however, they may be detected by a sensor disposed aside the weft guide passage. The weft reaching timing $T_{F1}$ is detected in response to a signal from the weft reaching sensor 18 and input. The 1st turn unwinding timing $T_{Y1}$, the 2nd turn unwinding timing $T_{Y2}$, the 3rd turn unwinding timing $T_{Y3}$ (, ..., n-th turn unwinding timing $T_{Yn}$) are detected respectively in response to signals from the weft unwinding sensor 17 and input. The weft yarn flight tension $T_{WF}$ is input from the weft tension sensor 19.

Accordingly, the followings are established: $I_1 = W_C$, $I_2 = P_{S1}$, $I_3 = P_{S2}$, ......, $I_{15} = T_{WF}$.

To each of 15 units ($H_1$ to $H_{15}$) in the intermediate layer, the signals $I_1$ to $I_{15}$ are input from all the units in the input layer.

In each unit in the intermediate layer, the sum total of the products each of which is of each input and a weight is calculated; an offset is added to the sum total to obtain an added value; and then a response function processing is made on the added value by using a sigmoid function, thereby obtaining output values $H_1$ to $H_{15}$ within a range of 0 to 1.

Here, an operating example of $H_1$ will be explained. The sum total of the products each of which is of each input $I_i$ and the weight $W_{1i}$. The offset $\theta_1$ is added to the sum total to make a calculation of $Y = (\Sigma W_{1i} \cdot I_i) + \theta_1$ where i = = 1 to 15. Subsequently, a response function processing is carried out using a sigmoid function thereby to obtain H1 = f(Y).

The sigmoid function is a simple and non-decreasing function within a range in which an output is 0 to 1. The sigmoid function is reflective of the character of saturated reaction of actual neuron.

Accordingly, $H_j = f((_i\Sigma W_{ji} \bullet I_i) + \theta_j)$ where i = 1 to 15, and j = 1 to 15.

To each of 6 units ($O_1$ to $O_6$), signals H1 to H15 are input from all the units in the intermediate layer.

In each unit in the output layer, similarly to the above, the sum total of the products each of which is of each input and a weight is calcurated. An offset is added to the sum total to obtain an added value. Then, a response function processing is made on this added value by using a sigmoid function so as to obtain output values $O_1$ to $O_6$ within a range of 0 to 1.

Here, an operating example of $O_6$ will be explained. The sum total of the products each of which is of each input Hi and a weight $V_{6j}$ is calculated. The offset $\gamma_6$ is added so as to calculate $Z = (\Sigma V_{6j} \cdot H_j) + \gamma_6$ where j = 1 to 15. Subsequently, the response function processing is made using a sigmoid function thereby to obtain $O_6 = f(Z)$.

Accordingly, $O_k = f((_j\Sigma W_{kj} \cdot H_j) + \gamma_k)$ where j = 1 to 15, and k = 1 to 6.

Here, $O_1$ to $O_6$ are respectively numerical values corresponding to the critical degrees of the weft picking trouble factors.

$O_1$ represents a good state (no trouble degree), $O_2$ a critical degree of the weft yarn breakage upon air ejection, $O_3$ a critical degree of the faulty shedding operation, $O_4$ a critical degree of the weft breakage at the base, $O_5$ a critical degree of the weft yarn tip end entangled, and $O_6$ a critical degree of the kinky state of weft yarn.

By this, for example, $O_1$ takes the largest value under the good state while $O_2$ takes the largest value under a condition the weft yarn breakage upon air ejection occurs, on the assumption that the above-mentioned weight and offset are optimized according to learning discussed after, thereby making possible to predict the weft picking trouble such as the weft yarn breakage upon air ejection or the like with respect to each factor.

Next, a method of the learning will be discussed.

For example, with respect to each weft picking trouble factor, it has been experimentally gotten that the trouble occurs under a certain input condition. Therefore, teacher signals $T_1$ to $T_6$ are given to the outputs $O_1$ to $O_6$ under the input condition, and then learning is made for the weight and the offset in order that the outputs $O_1$ to $O_6$ are respectively brought into agreement with the teacher signals $T_1$ to $T_6$.

That is, in case that it has been experimentally gotten that the weft yarn breakage upon air ejection occurs while other troubles do not occur under a certain input condition, the teacher signals $T_1 = 0$, $T_2 = 1$, $T_3 = 0$, $T_4 = 0$, $T_5 = 0$, $T_6 = 0$ are given upon setting the input condition so as to carry out the learning.

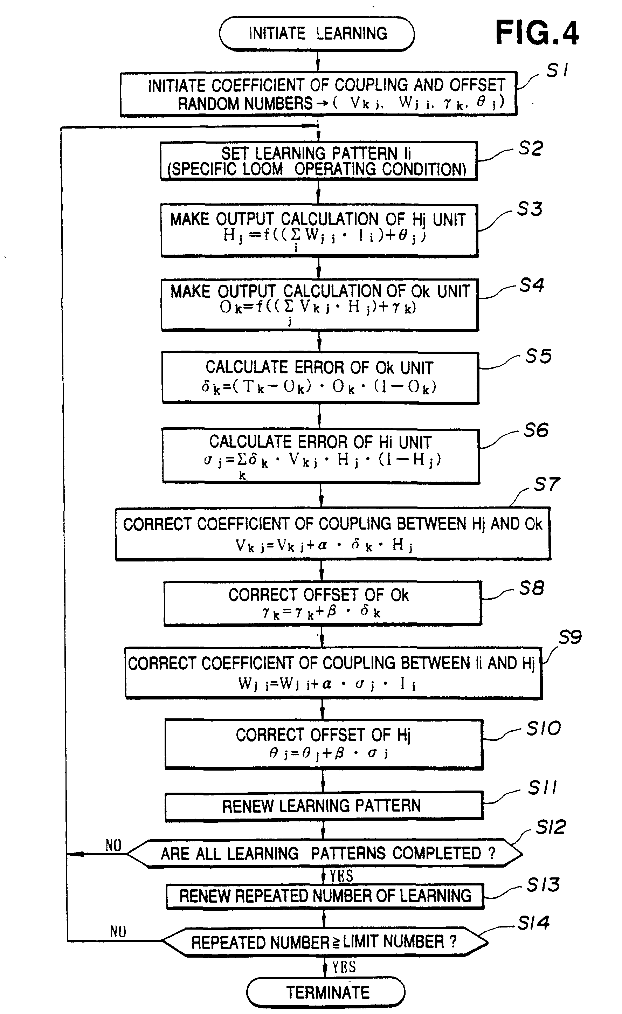

The procedure of this learning will be discussed with reference to a flowchart of Fig. 4. This instance is a back propagation learning using a steepest-descent method.

At a step 1 (indicated as "S1" in Fig. 4; similarly, steps 2 to 53 are respectively indicated as "S2 to S53" in Figs. 4 to 6), weights (referred hereafter to as "coefficient of coupling") $V_{kj}$, $W_{ji}$ and offsets $\gamma_k$, $\theta_i$ are initialized. These may be given by random numbers.

At a step 2, setting a learning pattern $I_i$ ($I_1$ to $I_{15}$) is made. That is, setting is made at a specific loom operating condition corresponding to either one of the good state, the weft yarn breakage upon air ejection, the faulty setting operation, the weft breakage at the base, the weft yarn tip end entangled and the weft yarn kinky state.

At a step 3, an output calculation of $H_j$ unit is made according to the below-mentioned equation.

$$H_j = f((_i\Sigma W_{ji} \cdot I_i) + \theta_j)$$

At a step 4, an output calculation of the $O_k$ unit is made according to the below-mentioned equation.

$$O_k = f((_j\Sigma V_{kj} \cdot H_j) + \gamma_k)$$

At a step 5, an error $\delta_k$ of the $O_k$ unit is calculated according to the below-mentioned equation.

$$\delta_k = (T_k - O_k) \cdot O_k \cdot (1 - O_k)$$

where $T_k$ is a teacher signal corresponding to the already set learning pattern.

At a step 6, an error $\sigma_j$ of the $H_j$ unit is calculated according to the below-mentioned equation.

$$\sigma_j = {}_k\Sigma\delta_k \cdot V_{kj} \cdot H_j \cdot (1 - H_j)$$

At a step 7, correction of the coefficient of coupling of the $H_j$ unit and the $O_k$ unit is made according to the below-mentioned equation.

$$V_{kj} = V_{kj} + \alpha \cdot \delta_k \cdot H_j$$

(where $\alpha$ is a constant)

At a step 8, correction of the offset $\gamma_k$ of the Ok unit is made according to the below-mentioned equation.

$$\gamma_k = \gamma_k + \beta \cdot \delta_k$$

(where $\beta$ is a constant)

At a step 9, correction of the coefficient of coupling in the $I_i$ unit and the $H_j$ unit is made according to the below-mentioned equation.

$$W_{ji} = W_{ji} + \alpha \cdot \sigma_j \cdot I_i$$

(where $\alpha$ is a constant)

At a step 10, correction of the offset $\theta j$ in the $H_j$ unit is made according to the below-mentioned equation.

$$\theta_j = \theta_j + \beta \cdot \sigma_j$$

(where $\beta$ is a constant)

At a step 11, the learning pattern $I_i$ ($I_1$ to $I_{15}$) is renewed.

At a step 12, a judgment is made as to whether all the learning patterns (i.e., at least six learning patterns which respectively correspond to the good state, the weft yarn breakage upon air ejection, the faulty shedding operation, the weft breakage at the base, the weft yarn tip end entangled and the weft yarn kinky state) are completed or not. In case of NO, a flow returns to the step 2. In case of YES, the flow goes to a step 13.

At the step 13, the repeated number of the learning is renewed (counted up).

At a step 14, a judgment is made as to whether the repeated number $\geq$ a limit number or not. In case of NO, the flow returns to the step 2. In case of YES, the learning is terminated.

A method of the back-propagation learning (particularly a correction manner for the coefficient of coupling) will be explained further in detail.

The back-propagation learning method is a learning method for correcting the coefficient of coupling in a manner to minimize the square (referred to as "square error") of the difference between an output of the output layer and a teacher signal by a neural network of three layers or more.

The output $O_k$ of the output layer unit k (k-th unit) is given by the below-mentioned equation (1).

$$O_k = f ({}_j\Sigma Vkj \bullet H_j + \gamma_k) \tag{1}$$

As the function f, a sigmoid function which is simple and does not decrease within a range where the output is 0 to 1 is used. This function is characterized in that its differentiation can be represented by the original sigmoid function as shown below.

$$f(x) = 1/[1 + \exp(-2x/u0)] = [1 + \tanh(x/u0)]/2 \qquad (2)$$

$$f'(x) = 2 \cdot f(x) \cdot [1 - f(x)]/u_0 \qquad (3)$$

The error between the teacher signal and the output is assumed as $\delta^k$ ($=T_k - O_k$), and the square error $E_P$ for this is minimized.

$$E_P = \Sigma(T_k - O_k)^2/2 \qquad (4)$$

$$\partial E_P/\partial O_k = -(T_k - O_k) = \delta^k \qquad (5)$$

Then, if the internal potential of the output layer unit k is written as $S_k$ ($=(_j\Sigma V_{kj} \cdot H_j) + \gamma_k$), the output of the unit becomes $O_k = f(S_k)$, and therefore the influence $\partial O_k/\partial V_{kj}$ to the output $O_k$ upon a slight change in the coefficient of coupling is given as follows, according to the equation (3):

$$\partial O_k/\partial V_{kj} = (\partial O_k/\partial S_k) \cdot (\partial S_k/\partial V_{kj})$$

$$= f'(S_k) \cdot H_j$$

$$= \eta_1 \cdot O_k \cdot (1 - O_k) \cdot H_j \qquad (6)$$

(where $\eta_1$ is a constant)

Accordingly, the influence $\partial E_P/\partial Vkj$ of the coefficient of coupling $V_{kj}$ to the square error $E_P$ is given as follows, according to the equations (5) and (6) :

$$\partial E_P/\partial V_{kj} = (\partial E_P/\partial O_k) \cdot (\partial O_k/\partial V_{kj})$$

$$= -\eta_1 \cdot \delta^k \cdot O_k \cdot (1 - O_k) \cdot H_j \qquad (7)$$

A renewed value $\Delta V_{kj}$ of the coefficient of coupling $V_{kj}$ for decreasing the square error $E_P$ is obtained by the below-mentioned equation (8) using the steepest descent method.

$$\Delta V_{kj} = -\alpha_2 \cdot (\partial E_P/\partial V_{kj})$$

$$= \alpha_2 \cdot \eta_1 \cdot \delta_k \cdot O_k \cdot (1-O_k) \cdot H_j$$

$$= \alpha \cdot \delta_k \cdot O_k \cdot (1-O_k) \cdot H_j \qquad (8)$$

(where $\alpha$ is a constant; and $\alpha = \alpha_2 \cdot \eta_1$)

The equation (8) means correcting the coefficient of coupling in the direction of minus in which an error function at the time of input of a pattern P tends to decrease.

Additionally, if the following is used as the error $\delta_k$ of the output layer unit k, the equation (8) becomes the below-mentioned equation (10):

$$\delta_k = -\partial E_P/\partial_{Sk}$$

$$= - (\partial E_P / \partial O_k) \bullet (\partial O_k / \partial S_k)$$

$$= \delta^k \bullet O_k \bullet (1 - O_k) \tag{9}$$

$$\Delta V_{kj} = \alpha \bullet \delta_k \bullet H_j \tag{10}$$

From the above, the error calculation equation (step 5) of the $O_k$ unit is as follows:

$$\delta_k = \delta^k \bullet O_k \bullet (1 - O_k)$$

$$= (T_k - O_k) \bullet O_k \bullet (1 - O_k) \tag{11}$$

The correction equation (step 7) of the coefficient of coupling of $H_j$ and $O_k$ is as follows:

$$V_{kj} = V_{kj} + \Delta V_{kj}$$

$$= V_{kj} + \alpha \bullet \delta_k \bullet H_j \tag{12}$$

Similarly, the steepest descent method can be used for a renewed value $\Delta W_{ji}$ of the coefficient of coupling $W_{ji}$ to the input layer $I_i$ from the intermediate layer $H_j$.

First, if the internal potential of the intermediate layer unit j is written as $U_j$ $(=(_i\Sigma W_{ji} \cdot I_i) + \theta_j)$, the output of the unit becomes $H_j = f(U_j)$, and therefore the influence $\partial E_P / \partial W_{ji}$ to the square error $E_P$ upon a slight change in the coefficient of coupling $W_{ji}$ is as follows:

$$\partial E_P / \partial W_{ji} = (\partial E_P / \partial S_k) \bullet (\partial S_k / \partial H_i) \bullet (\partial H_j / \partial U_j) \bullet (\partial U_j / \partial W_{ji})$$

$$= [\Sigma(-\delta_k) \bullet V_{kj}] \bullet f'(U_j) \bullet I_i$$

$$= -\Sigma \delta_k \bullet Vk_j \bullet H_j \bullet (1 - H_j) \bullet I_i \tag{13}$$

Similarly to the equation (9), if the following is used as the error $\sigma_j$ of the intermediate unit j, the equation (13) becomes the below-mentioned equation (15):

$$\sigma_j = -\partial E_P / 3U_i$$

$$= {}_k\Sigma \delta_k \bullet Vk_j \bullet H_j \bullet (1 - H_j) \tag{14}$$

$$\partial E_P / \partial W_{ji} = -\sigma_j \bullet I_i \tag{15}$$

Accordingly, the renewed value $\Delta W_{ji}$ of the coefficient of coupling $W_{ji}$ is given as follows, according to the equation (15):

$$\Delta W_{ji} = -\eta_3 \bullet \partial E_P / \partial W_{ji}$$

$$= \eta_3 \bullet \sigma_j \bullet I_i \tag{16}$$

(where $\eta_3$ is a constant)

From the above, the error calculation equation (step 6) of $H_j$ unit is as follows:

$$\sigma_j = {}_k\Sigma\delta_k \bullet V_{kj} \bullet H_j \bullet (1 - H_j) \tag{17}$$

The correction equation (step 9) of the coefficient of coupling of li and Hj is as follows:

$$W_{ji} = W_{ji} + \Delta W_{ji}$$

$$= W_{ji} + \alpha \bullet \sigma_j \bullet I_i \tag{18}$$

(where $\alpha$ is a constant; and $\alpha = \eta_3$)

It will be noted that the above equations are for minimizing the error $E_P$ with respect to a pair (an input and an output); however, with respect to a variety of combination (indicated by P) of inputs and outputs, it is necessary to decide the error function of

$$E_t = {}_p\Sigma_k\Sigma (T_{pk} - O_{pk})^2/2 = {}_p\Sigma E_P \tag{19}$$

, in which the error $E_P$ in the learning of each pattern P is gradually made small thereby minimizing the error function $E_t$ as a whole.

While the mode of the learning has been described as being such that the learning is accomplished upon the loom operating condition being set corresponding to the weft picking trouble factor, it will be understood that a teacher signal may be provided by inputting a trouble factor (for example, the weft yarn breakage upon air ejection) through an operational button or the like when the trouble occurs upon making a suitable loom operation in order to accomplish a learning, thereby learning the correspondency between the flight mode of the weft yarn and the weft picking trouble factor in the loom operating condition at that time.

Next, a warning device and a control system for the loom both using the above-mentioned trouble predicting device will be discussed.

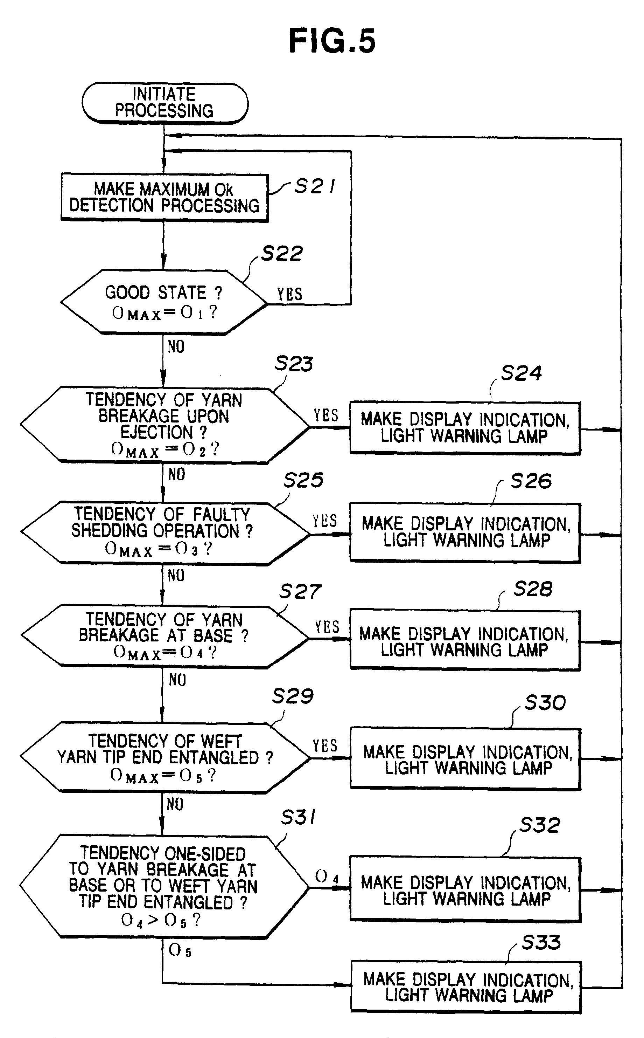

Fig. 5 shows, as a flowchart, the processing procedure of a case in which the trouble predicting device is used as the warning device.

At a step 21, one having the maximum value is detected from the outputs $O_k$ ($O_1$ to $O_6$) of the neural network, in which the detected one is indicated as $O_{MAX}$.

At a step 22, a judgment is made to as to whether $O_{MAX} = O_1$ or not. In case of YES, it is assumed to be in the good state and therefore a flow returns to the step 21. In case of NO, the flow goes to a step 23.

At the step 23, a judgment is made as to whether $O_{MAX} = O_2$ or not. In case of YES, it is assumed that the critical degree of the weft yarn breakage upon air ejection is high so as to establish a tendency of occurrence of the weft yarn breakage upon air ejection, and therefore the flow goes to a step 24. Then, indicating the fact on a display and/or lighting a warning lamp is made by the warning device 22. In case of NO, the flow goes to a step 25.

At a step 25, a judgment is made as to whether $O_{MAX} - O_3$ or not. In case of YES, it is assumed that the critical degree of the faulty shedding operation is high so as to establish a tendency of occurrence of the faulty shedding operation, and therefore the flow goes to a step 26. Then, indicating the fact on the display and/or lighting a warning lamp is made by the warning device 22. In case of NO, the flow goes to a step 27.

At a step 27, a judgment is made as to whether $O_{MAX} = O_4$ or not. In case of YES, it is assumed that the critical degree of the weft yarn breakage at the base is high so as to establish a tendency of occurrence of the weft yarn breakage at the base, and therefore the flow goes to a step 28, indicating the fact that on the display and/or lighting a warning lamp. In case of NO, the flow goes to a step 29.

At the step 29, a judgment is made as to whether $O_{MAX} = O_5$ or not. In case of YES, it is assumed that the critical degree of the weft yarn tip end entangled is high so as to establish a tendency of occurrence of the weft yarn tip end entangled, and therefore the flow goes to a step 30, indicating the fact on the display and/or lighting a warning lamp. In case of NO, the flow goes to a step 31.

In case that the flow goes to the step 31, necessarily the relationship of $O_{MAX} = O_6$ is established so that the critical degree of the weft yarn kinky state is high. However, this depends on the tendency of the weft yarn breakage at the base or on the tendency of the weft yarn tip end entangled. Therefore, here, a judgment is made as to whether the tendency is one-sided to the weft yarn breakage at the base or to the weft yarn tip end entangled by comparing the critical degree $O_4$ of the weft yarn breakage at the base and the critical degree $O_5$ of the weft yarn tip end entangled. In case that the critical degree $O_4$ of the weft yarn breakage at the base is higher than the other, the flow goes to a step 32, indicating the fact on the display and/or lighting a warning lamp. In case that the critical degree $O_5$ of the weft

yarn tip end entangled is higher than the other, the flow goes to a step 33, indicating the fact on the display and/or lighting a warning lamp.

In this case, an operator gets a predicted trouble factor by the display indication and/or the warning lamp, and suitably changes a weaving condition in accordance with the predicted trouble factor.

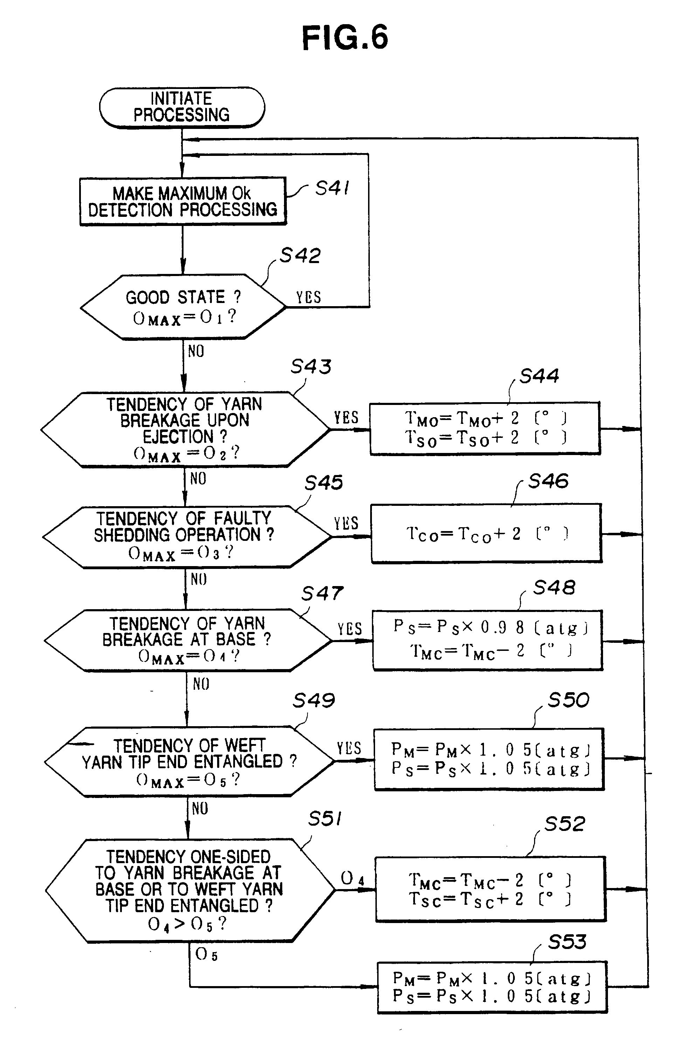

Fig. 6 shows, as a flowchart, the processing procedure of a case in which the trouble predicting device is used as the control system for the loom.

At a step 41, one having the maximum value is detected from the outputs $O_1$ to $O_6$ of the neural network, in which the detected one is indicated as $O_{MAX}$.

At a step 42, a judgment is made to as to whether $O_{MAX} = O_1$ or not. In case of YES, it is assumed to be in the good state and therefore a flow returns to the step 41. In case of NO, the flow goes to a step 43.

At the step 43, a judgment is made as to whether $O_{MAX} = O_2$ or not. In case of YES, it is assumed that the critical degree of the weft yarn breakage upon air ejection is high so as to establish a tendency of occurrence of the weft yarn breakage upon air ejection, and therefore the flow goes to a step 44. Then, the ejection initiation timing $T_{MO}$ of the main nozzle 1 is retarded $2°$ in the loom main shaft angle relative to the present set value in order to shorten a prior ejection (air ejection prior to weft yarn projection) time duration, while the ejection initiation timing $T_{SO}$ of the auxiliary nozzle 11 is similarly retarded $2°$ relative to the present set value. In case of NO, the flow goes to a step 45.

At a step 45, a judgment is made as to whether $O_{MAX} = O_3$ or not. In case of YES, it is assumed that the critical degree of the faulty shedding operation is high so as to establish a tendency of occurrence of the faulty shedding operation, and therefore the flow goes to a step 46. Then, the withdrawal timing (the weft picking initiation timing) $T_{CO}$ of the measuring pin 9 is retarded $2°$ in order to prevent the weft yarn from being caught by the warp yarns. In case of NO, the flow goes to a step 47.

At the step 47, a judgment is made as to whether $O_{MAX} = O_4$ or not. In case of YES, it is assumed that the critical degree of the weft yarn breakage at the base is high so as to establish a tendency of occurrence of the weft yarn breakage at the base, and therefore the flow goes to a step 48. Then, the ejection pressure Ps of the auxiliary nozzle 11 is reduced 2% (x 0.98) relative to the present set value, while the ejection termination timing TMC of the main nozzle 1 is advanced $2°$ relative to the present set value. In case of NO, the flow goes to a step 49.

At the step 49, a judgment is made as to whether $O_{MAX} = O_5$ or not. In case of YES, it is assumed that the critical degree of the weft yarn tip end entangled is high so as to establish a tendency of occurrence of the weft yarn tip end entangled, and therefore the flow goes to a step 50. Then, the ejection pressure $P_M$ of the main nozzle 1 is increased 5% (x 1.05), while the ejection pressure Ps of the auxiliary nozzle 11 is increased 5% (x 1.05). In case of NO, the flow goes to a step 51.

In case that the flow goes to the step 51, necessarily the relationship of $O_{MAX} = O_6$ is established so that the critical degree of the weft yarn kinky state is high. However, this depends on the tendency of the weft yarn breakage at the base or on the tendency of the weft yarn tip end entangled. Therefore, here, a judgment is made as to whether the tendency is one-sided to the weft yarn breakage at the base or to the weft yarn tip end entangled by comparing the critical degree $O_4$ of the weft yarn breakage at the base and the critical degree $O_5$ of the weft yarn tip end entangled.

In case that the critical degree $O_4$ of the weft yarn breakage at the base is higher than the other, the flow goes to a step 52. Then, the ejection termination timing $T_{MC}$ of the main nozzle 1 is advanced $2°$, while the ejection termination timing $T_{SC}$ of the auxiliary nozzle 11 is retarded $2°$. In case that the critical degree $O_5$ of the weft yarn tip end entangled is higher than the other, the flow goes to a step 53. Then, the ejection pressure $P_M$ of the main nozzle 11 is increased 5% (x 1.05), while the ejection pressure $P_S$ of the auxiliary nozzle 11 is increased 5% (x 1.05).

Accordingly, it becomes possible to automatically cope with the predicted trouble factor and thereby to achieve an optimum operation of the loom.

While the trouble predicting device is described as being arranged to be controlled by such a logic, it will be understood that it may be arranged such that control objects and their control amounts are calculated by a fuzzy inference.

As discussed above, according to this embodiment, a weaving trouble factor which may occur in the future can be predicted from the present weaving condition by using the neural network. Accordingly, a warning or an avoiding control can be made in accordance with this prediction. It becomes possible to achieve the optimum operation of the loom particularly by making a control to change the weaving condition of the loom in accordance with the critical degree of each weaving trouble factor.

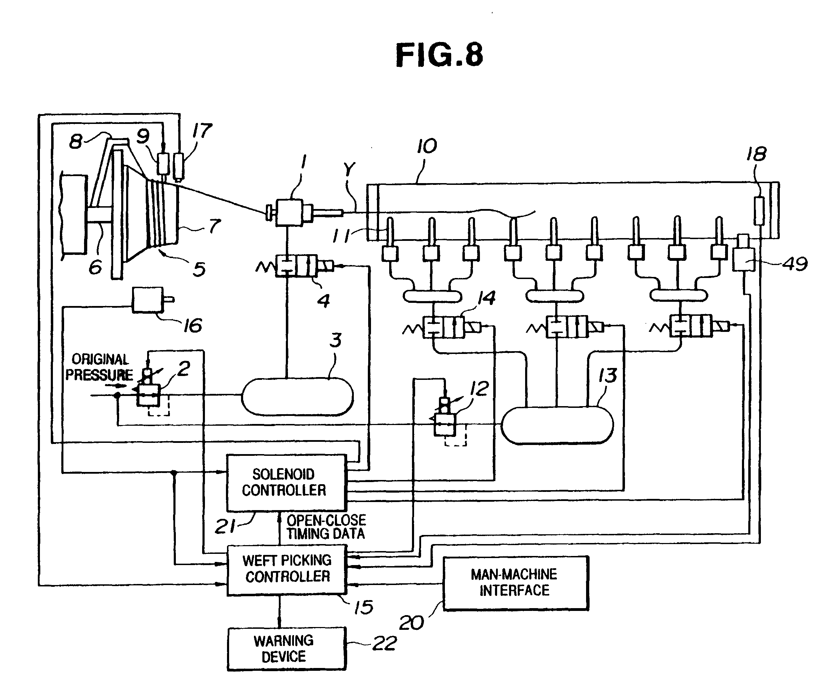

Next, a second embodiment of the present invention will be discussed with reference to Figs. 8 to 14.

This embodiment is similar to the first embodiment, and therefore explanation of corresponding parts is omitted. This embodiment is arranged as follows:

To the weft picking controller 15, a signal from a CCD camera 49 including a CCD as a solid image pickup element is input for the purpose of judgment (prediction of weft picking trouble) of weft picking condition as discussed after, in addition to the above signals.

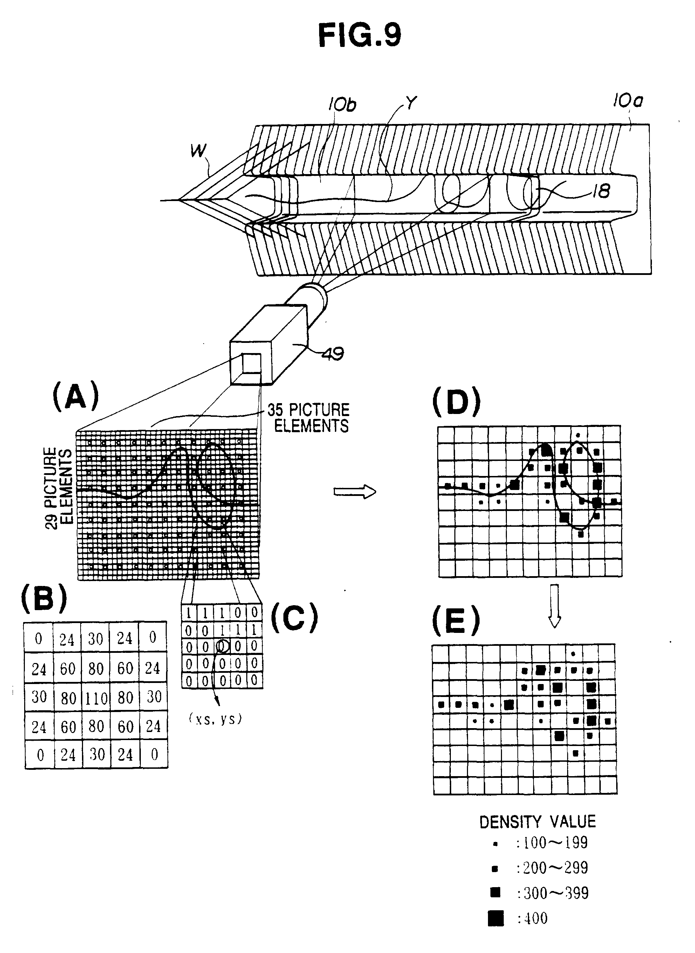

The CCD camera 49 is a weft yarn image pickup means for picking up the image of a flight form of the weft yarn Y. As shown in Fig. 9, the CCD camera 49 particularly picks up the image of a yarn posture around the tip end section of the weft yarn Y at a timing at which the weft yarn Y has reached the weft yarn reaching sensor 18 (specifically, at a timing at which the weft reaching signal has been obtained from the weft reaching sensor 18, or a predetermined loom main shaft angle at which the reaching of the weft yarn is expected) and at a position outside the array of the warp yarns W. In Fig. 9, the reference numeral 10a denotes a reed blade, and 10b the weft guide passage. Though not shown, a light source for lighting, a light-reflecting plate and the like are used for the purpose of picking up the image.

Furthermore, the weft picking controller 15 watches the signal from the weft reaching sensor 18. In the event that no weft reaching signal is obtained from the weft reaching sensor 18 in a predetermined loom main shaft angle range, a judgment is made as being occurrence of a mispick, and therefore the loom is stopped through a loom stopping circuit (not shown).

To the weft picking controller 15, an indicating device such as a CRT (or a liquid crystal) display or a warning light of the multiple color indication type is connected in order to make warning in accordance with the result of judgment of the weft picking (prediction of weft picking trouble) as discussed after.

Subsequently, means for judging a weft picking condition (prediction of the weft picking trouble), according to the present invention, will be discussed.

The weft picking condition judging means is constituted of a microcomputer in the weft picking controller 15 and adapted as follows: A plurality of data are extracted from the weft yarn image relating to the flight form of the weft yarn, obtained by the CCD camera 49. The data are input to the neural network. The critical degree of trouble occurrence is calculated in accordance with the sum total of products each of which is of the input value of each data and a weight (coefficient of coupling), for each predetermined weft picking trouble factor. The calculated critical degree is output.

Here, as the weft picking trouble factors, six states such as "good state (no trouble)", "weft breakage upon air ejection", "faulty shedding operation", "weft breakage at the base", "weft yarn tip end entangled", and "kinky state of weft yarn" are used. The critical degree of each state is calculated.

Accordingly, by using the CCD camera 49 as the weft yarn image pickup means, particularly the image of the yarn posture around the tip end section of the weft yarn Y is picked up at a timing at which the weft yarn Y has reached the weft yarn reaching sensor 18 (specifically, at a timing at which the weft yarn reaching singal has been obtained from the weft reaching sensor 18, or a predetermined loom main shaft angle at which the reaching of the weft yarn is expected), so as to obtain the weft yarn image. The weft yarn image is subjected to an image processing and inputted to the neural network.

The image processing will be discussed with reference to Fig. 9 and on the assumption that the number of picture elements of the CCD is 35 x 29 = 1015 and that white and black binary information is obtained in each picture element.

Input data provided to the neural network are data of 99 dimensions which data are obtained by resampling the weft yarn image of the binary informations of 35 x 29 picture elements read by the CCD, into multiple informations of 11 x 9 picture elements by using a Gauss mask filter (mask pattern) of 5 x 5.

This multiple informations of 11 x 9 picture elements represent a density characteristics and are outputted as density values which are obtained by the following method:

If the picture elements 35 x 29 of the CCD are converted to a two-dimensional coordinate as shown in Fig. 9 - (A), picture element data on the two-dimensional coordinate is represented by f (x, y). On this two-dimensional coordinate, there are sampling points (O point in Fig. 9 - (A)) of 11 x 9 which are located equidistant. Additionally, a concrete example of the two-dimensional (5 x 5) mask pattern used for density calculation is shown in Fig. 9 - (B), in which its values are represented as M (i, j) wherein i = 1 to 5, and j = 1 to 5.

The coordinates of the sampling point on the two-dimensional coordinate is assumed as (xs, ys), the density value d (xs, ys) at that sampling point is given by the following equation:

$$d (xs, ys)$$

$$= {}_j\Sigma_i\Sigma M (i, j) \cdot f (xs - 3 + i, ys - 3 + j)$$

That is, the center point (the point of 110 in value in Fig. 9 - (B)) is determined as the sampling point, upon which the density value at the sampling point is obtained by totalling the values at the mask pattern positions at which the picture element data are "1".

For example, the density value at one sampling point on Fig. 9 - (A) will be calculated. From the picture element data of 5 x 5 around the sampling point which data are shown in Fig. 9 - (C) upon being taken out and from the value on the two-dimensional mask pattern of Fig. 9 - (B), the density value is obtained as 0 + 24 + 30 + 80 + 60 + 24 = 218.

When the picture elements of 5 x 5 around the sampling point are all "1", the density value at the sampling point is 982. Accordingly, the density value is within a range from 0 to 982.

The aggregation of the thus obtained density values at the sampling points of 11 x 9 is the density characteristics of the weft yarn image. For example, the density characteristics as shown in Fig. 9 - (D) and (E) are obtained from the binary weft yarn image as shown in Fig. 9 - (A). In Fig. 9 - (D) and (E), the density value is represented by four kinds of symbols (the size of ■).

The thus obtained 99 density values are inputted to the neural network, in which the value obtained by the above-mentioned calculation equation of the density value d (xs, ys) is divided by 1000 in order to obtain an actually input density value which is within a range from 0 to 1.

While only a binary image processing method using a mask processing has been described hereinbefore, it will be understood that other simple binary processings may be used, or an image processing for emphasizing a contrast may be added.

In a processing method of emphasizing the contrast, the highest and lowest density values Ha, Hi are determined on the whole area to be processed. A density Lx after processing is given by the following equation in which Lp is a density of the picture element before processing:

$$Lx = K \times (Lp - Hi)/(Ha - Hi)$$

where K is a constant.

Subsequently, an explanation is made on the neural network.

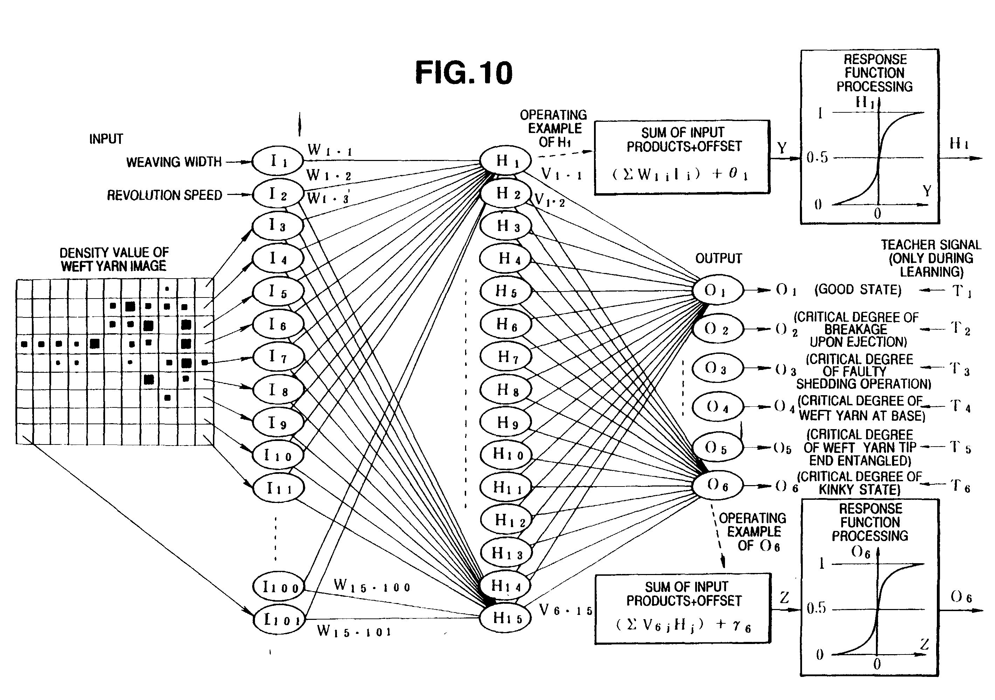

Fig. 10 shows a trouble predicting neural network which uses a hierarchical network including three layers such as an "input layer", an "intermediate layer", and an "output layer".

To 101 units ($I_1$ to $I_{101}$) in the input layer, a weaving width $W_C$, a loom revolution speed $R_{PM}$, and the above-mentioned 99 density values $d_{(1, 1)}$ to $d_{(11, 9)}$ are respectively inputted.

Here, the weaving width $W_C$ is input, for example, in millimeter as unit by a man. The loom revolution speed RPM is input in accordance with the signal from the loom angle sensor 16. A yarn physical property, a yarn thickness and the like may be input in addition to the above.

Accordingly, the following relationships are made: $I_1 = W_C$, $I_2 = R_{PM}$, $I_3 = d_{(1, 1,)}$, ...., $I_{101} = d_{(11, 9)}$.

To each of 15 units ($H_1$ to $H_{15}$) in the intermediate layer, the signals $I_1$ to $I_{101}$ are input from all the units in the input layer.

In each unit in the intermediate layer, the sum total of the products each of which is of each input and a weight is calculated; an offset is added to the sum total to obtain an added value; and then a response function processing is made on the added value by using a sigmoid function, thereby obtaining output values $H_1$ to $H_{15}$ within a range of 0 to 1.

Here, an operating example of $H_1$ will be explained. The sum total of the products each of which is of each input $I_i$ and the weight $W_{1i}$. The offset $\theta_1$ is added to the sum total to make a calculation of $Y = (\Sigma W_{1i} \cdot I_i) + \theta_1$ where i = 1 to 100. Subsequently, a response function processing is carried out using a sigmoid function thereby to obtain $H_1 = f(Y)$.

The sigmoid function is a simple and non-decreasing function within a range in which an output is 0 to 1. The sigmoid function is reflective of the character of saturated reaction of actual neuron.

Accordingly, $H_j = f ((_i\Sigma W_{ji} \cdot I_i) + \theta_j)$ where i = 1 to 101, and j = 1 to 15.

To each of 6 units ($O_1$ to $O_6$), signals $H_1$ to $H_{15}$ are input from all the units in the intermediate layer.

In each unit in the output layer, similarly to the above, the sum total of the products each of which is of each input and a weight is calculated. An offset is added to the sum total to obtain an added value. Then, a response function processing is made on this added value by using a sigmoid function so as to obtain output values $O_1$ to $O_6$ within a range of 0 to 1.

Here, an operating example of $O_6$ will be explained. The sum total of the products each of which is of each input $H_i$ and a weight $V_{6j}$ is calculated. The offset $\gamma_6$ is added so as to calculate $Z = (\Sigma V_{6j} \cdot H_j) + \gamma_6$ where j = 1 to 15. Subsequently, the response function processing is made using a sigmoid function thereby to obtain $O_6 = f(Z)$.

Accordingly, $O_k = f((_j\Sigma W_{kj} \cdot H_j) + \gamma_k)$ where j = 1 to 15, and k = 1 to 6.

Here, $O_1$ to $O_6$ are respectively numerical values corresponding to the critical degrees of the weft picking trouble factors.

$O_1$ represents a good state (no trouble degree), $O_2$ a critical degree of the weft yarn breakage upon air ejection, $O_3$ a critical degree of the faulty shedding operation, $O_4$ a critical degree of the weft breakage at the base, $O_5$ a critical degree of the weft yarn tip end entangled, and $O_6$ a critical degree of the kinky state of weft yarn.

By this, for example, $O_1$ takes the largest value under the good state while $O_2$ takes the largest value under a condition the weft yarn breakage upon air ejection occurs, on the assumption that the above-mentioned weight and offset are optimized according to learning discussed after, thereby making possible to predict the weft picking trouble such as the weft yarn breakage upon air ejection or the like with respect to each factor.

Next, a method of the learning will be discussed.

For example, with respect to each weft picking trouble factor, it has been experimentally gotten that the trouble occurs under a certain specified loom operating condition. Therefore, the loom is operated upon setting this loom operating condition so as to learn the correspondency between the flight form of the weft yarn and the weft picking trouble factor in this loom operating condition. During this loom operation, the image of the flight form of the weft yarn at this time is picked up to provide the inputs $I_1$ to $I_{101}$, while teacher signals $T_1$ to $T_6$ are given to the outputs $O_1$ to $O_6$ under the input condition, and then learning is made for the weight and the offset in order that the outputs $O_1$ to $O_6$ are respectively brought into agreement with the teacher signals $T_1$ to $T_6$.

That is, in case that it has been experimentally gotten that the weft yarn breakage upon air ejection occurs while other troubles do not occur under a certain input condition, the teacher signals $T_1 = 0$, $T_2 = 1$, $T_3 = 0$, $T_4 = 0$, $T_5 = 0$, $T_6 = 0$ are given upon setting the input condition so as to carry out the learning.

Additionally, the following tendencies exist between the flight form of the weft yarn (for example, the yarn posture around the weft yarn tip end section at the end of the fabric) and the weft picking trouble:

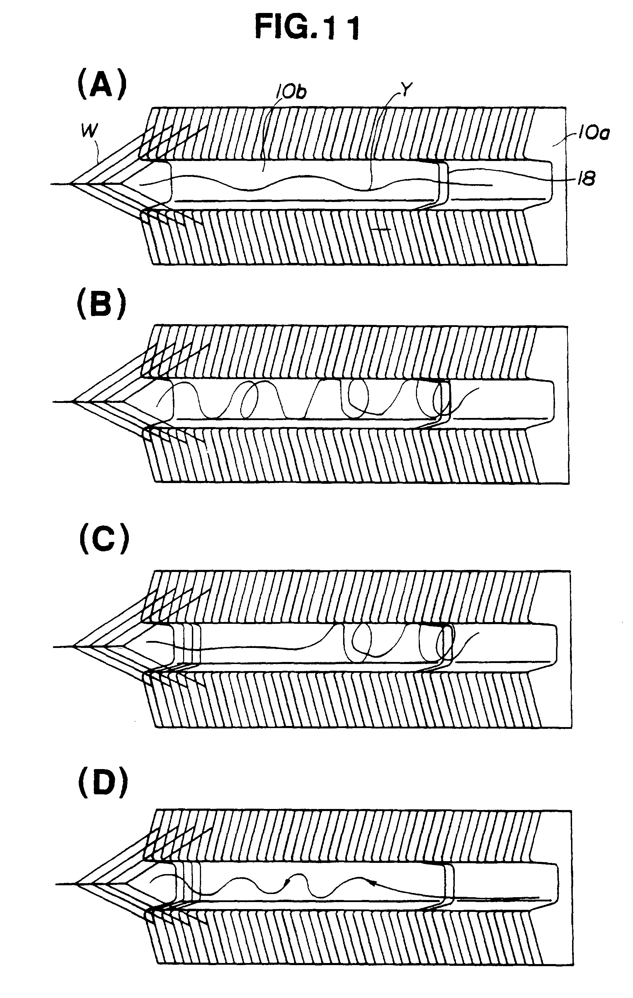

The flight form at (A) in Fig. 11 is in a good state (a state having a suitable slackness).

The flight form at (B) in Fig. 11 is in a state having a much slackness amount of the yarn and therefore has a tendency of the weft yarn tip end entangled.

The flight form at (C) in Fig. 11 is less in slackness amount of the yarn as compared with that at (B) in the same figure but has a tendendy of the weft yarn tip end entangled.

The flight form at (D) in Fig. 11 is in a state having a much slackness amount of the yarn and therefore has a tendency of the kinky state.

As mentioned above, it is being understood that a close relationship exists between the flight from of the weft yarn and the weft picking trouble.

Accordingly, in case that the relationship between the flight forms of the weft yarn and the weft picking troubles is gotten within a predetermined range, the images of such flight forms of the weft yarn have been previously picked up and stored as data, and then learning can be made by providing the image data and the teacher signals corresponding to the data without making an actual loom operation during accomplishing the learning in order to accomplishing the learning.

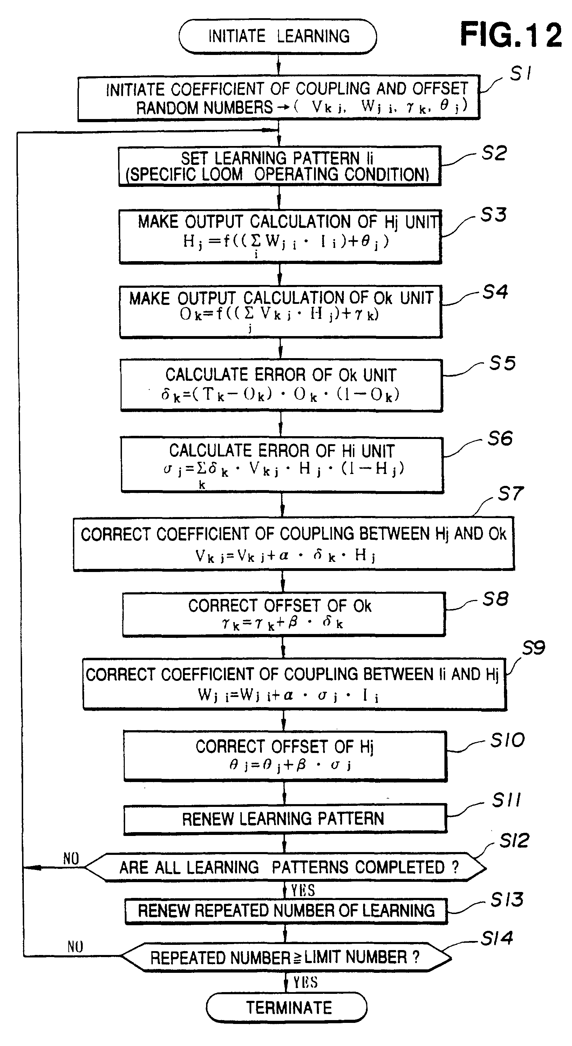

The procedure of this learning will be discussed with reference to a flowchart of Fig. 12. This instance is a back-propagation learning using a steepest descent method.

At a step 1A (indicated as "S1A" in Fig. 12; similarly, steps 2A to 53A are respectively indicated as "S2A to S53A" in Figs. 12 to 14), weights (referred hereafter to as "coefficient of coupling") $V_{kj}$, $W_{ji}$ and offsets $\gamma_k$, $\theta_i$ are initialized. These may be given by random numbers.

At a step 2A, setting a learning pattern $I_i$ ($I_1$ to $I_{101}$) is made. That is, setting is made at a specific loom operating condition corresponding to either one of the good state, the weft yarn breakage upon air ejection, the faulty setting operation, the weft breakage at the base, the weft yarn tip end entangled and the weft yarn kinky state. Then, the loom is operated, in which the image of the flight form of the weft yarn is picked up to provide the inputs $I_1$ to $I_{101}$.

At a step 3A, an output calculation of $H_j$ unit is made according to the below-mentioned equation.

$$H_j = f(({}_i\Sigma W_{ji} \bullet I_i) + \theta_j)$$

At a step 4A, an output calculation of the $O_k$ unit is made according to the below-mentioned equation.

$$O_k = f(({}_j\Sigma V_{kj} \bullet H_j) + \gamma_k)$$

At a step 5A, an error $\delta_k$ of the $O_k$ unit is calculated according to the below-mentioned equation.

$$\delta_k = (T_k - O_k) \bullet O_k \bullet (1 - O_k)$$

where $T_k$ is a teacher signal corresponding to the already set learning pattern.

At a step 6A, an error $\sigma_j$ of the $H_j$ unit is calculated according to the below-mentioned equation.

$$\sigma_j = {}_k\Sigma\delta_k \bullet V_{kj} \bullet H_j \bullet (1 - H_j)$$

At a step 7A, correction of the coefficient of coupling of the $H_j$ unit and the $O_k$ unit is made according to the

below-mentioned equation.

$$V_{kj} = V_{kj}8 + \alpha \cdot \delta_k \cdot H_j$$

(where $\alpha$ is a constant)

At a step 8A, correction of the offset $\gamma_k$ of the $O_k$ unit is made according to the below-mentioned equation.

$$\gamma_k = \gamma_k + \beta \cdot \delta_k$$

(where $\beta$ is a constant)

At a step 9A, correction of the coefficient of coupling in the $I_i$ unit and the $H_j$ unit is made according to the below-mentioned equation.

$$W_{ji} = W_{ji} + \alpha \cdot \sigma_j \cdot I_i$$

(where $\alpha$ is a constant)

At a step 10A, correction of the offset $\theta_j$ in the $H_j$ unit is made according to the below-mentioned equation.

$$\theta_j = \theta_j + \beta \cdot \sigma_j$$

(where $\beta$ is a constant)

At a step 11A, the learning pattern $I_i$ (I1 to $I_{15}$) is renewed.

At a step 12A, a judgment is made as to whether all the learning patterns (i.e., at least six learning patterns which respectively correspond to the good state, the weft yarn breakage upon air ejection, the faulty shedding operation, the weft breakage at the base, the weft yarn tip end entangled and the weft yarn kinky state) are completed or not. In case of NO, a flow returns to the step 2. In case of YES, the flow goes to a step 13A.

At the step 13A, the repeated number of the learning is renewed (counted up).

At a step 14A, a judgment is made as to whether the repeated number $\geq$ a limit number or not. In case of NO, the flow returns to the step 2. In case of YES, the learning is terminated.

The back-propagation learning method (particularly a correction method of the coefficient of coupling) is the same as that in the first embodiment.

Next, discussion is made on a warning device (warning means) and a weft picking control system (weft picking condition changing means) for the loom both using output of the neural network as a result of weft picking condition judgment (weft picking trouble prediction).

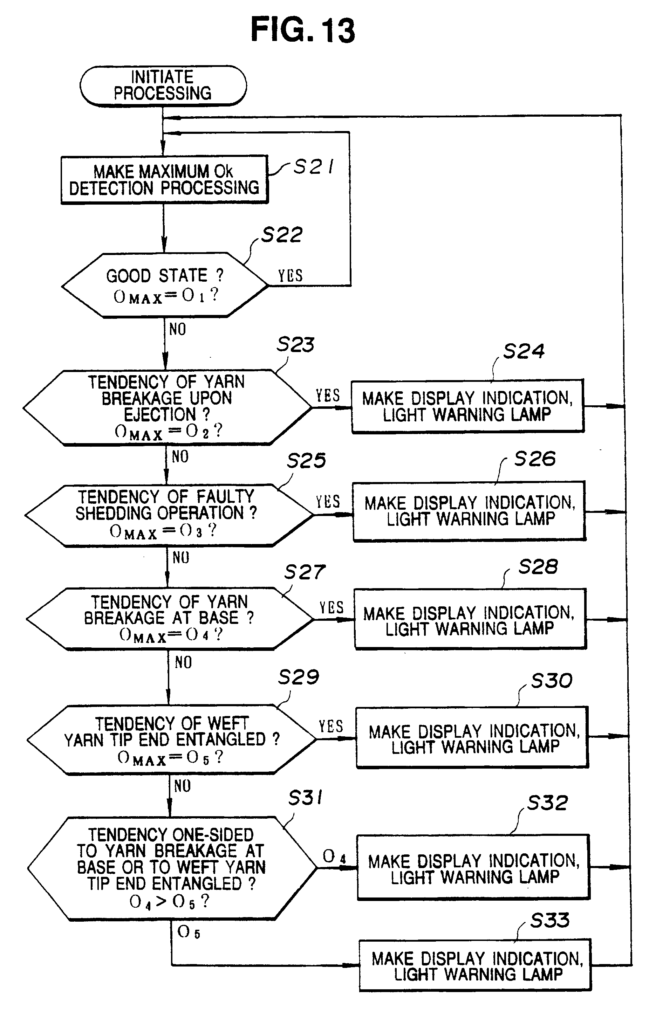

Fig. 13 shows, as a flowchart, the processing procedure of a case in which the above arrangement of the present invention is used as the warning device.

At a step 21A, one having the maximum value is detected from the outputs $O_k$ ($O_1$ to $O_6$) of the neural network, in which the detected one is indicated as $O_{MAX}$.

At a step 22A, a judgment is made to as to whether $O_{MAX} = O_1$ or not. In case of YES, it is assumed to be in the good state and therefore a flow returns to the step 21. In case of NO, the flow goes to a step 23A.

At the step 23A, a judgment is made as to whether $O_{MAX} = O_2$ or not. In case of YES, it is assumed that the critical degree of the weft yarn breakage upon air ejection is high so as to establish a tendency of occurrence of the weft yarn breakage upon air ejection, and therefore the flow goes to a step 24A. Then, indicating the fact on a display and/or lighting a warning lamp is made by the warning device 22. In case of NO, the flow goes to a step 25A.

At a step 25A, a judgment is made as to whether $O_{MAX} = O_3$ or not. In case of YES, it is assumed that the critical degree of the faulty shedding operation is high so as to establish a tendency of occurrence of the faulty shedding operation, and therefore the flow goes to a step 26A. Then, indicating the fact on the display and/or lighting a warning lamp is made by the warning device 22. In case of NO, the flow goes to a step 27A.

At the step 27A, a judgment is made as to whether $O_{MAX} = O_4$ or not. In case of YES, it is assumed that the critical degree of the weft yarn breakage at the base is high so as to establish a tendency of occurrence of the weft yarn breakage at the base, and therefore the flow goes to a step 28A, indicating the fact that on the display and/or lighting a warning lamp. In case of NO, the flow goes to a step 29A.

At the step 29A, a judgment is made as to whether $O_{MAX} = O_5$ or not. In case of YES, it is assumed that the critical degree of the weft yarn tip end entangled is high so as to establish a tendency of occurrence of the weft yarn tip end entangled, and therefore the flow goes to a step 30A, indicating the fact on the display and/or lighting a warning lamp. In case of NO, the flow goes to a step 31A.

In case that the flow goes to the step 31A, necessarily the relationship of $O_{MAX} = O_6$ is established so that the critical degree of the weft yarn kinky state is high. However, this depends on the tendency of the weft yarn breakage at the base or on the tendency of the weft yarn tip end entangled. Therefore, here, a judgment is made as to whether the tendency is one-sided to the weft yarn breakage at the base or to the weft yarn tip end entangled by comparing the critical degree $O_4$ of the weft yarn breakage at the base and the critical degree $O_5$ of the weft yarn tip end entangled. In case that the critical degree $O_4$ of the weft yarn breakage at the base is higher than the other, the flow goes to a step 32A, indicating the fact on the display and/or lighting a warning lamp. In case that the critical degree $O_5$ of the weft yarn tip end entangled is higher than the other, the flow goes to a step 33A, indicating the fact on the display and/or lighting a warning lamp.

In this case, an operator gets a predicted trouble factor by the display indication and/or the warning lamp, and suitably changes a weaving condition in accordance with the predicted trouble factor.

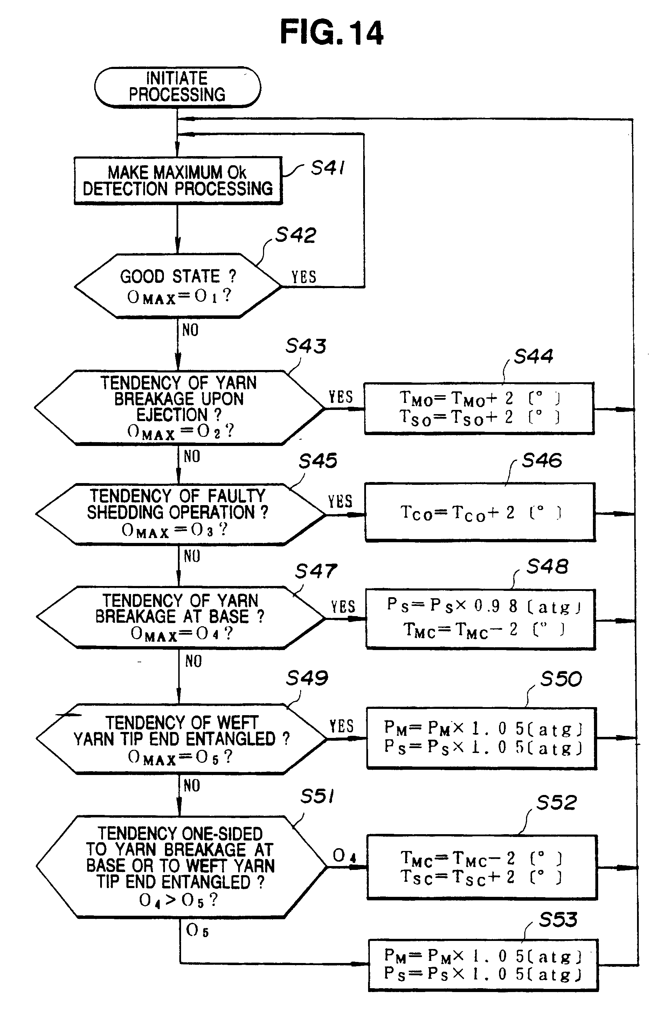

Fig. 14 shows, as a flowchart, the processing procedure of a case in which the above arrangement of the present invention is used as the weft picking control system for the loom.

At a step 41A, one having the maximum value is detected from the outputs $O_1$ to $O_6$ of the neural network, in which the detected one is indicated as $O_{MAX}$.

At a step 42A, a judgment is made to as to whether $O_{MAX} = O_1$ or not. In case of YES, it is assumed to be in the good state and therefore a flow returns to the step 41. In case of NO, the flow goes to a step 43A.

At the step 43A, a judgment is made as to whether $O_{MAX} = O_2$ or not. In case of YES, it is assumed that the critical degree of the weft yarn breakage upon air ejection is high so as to establish a tendency of occurrence of the weft yarn breakage upon air ejection, and therefore the flow goes to a step 44A. Then, the ejection initiation timing $T_{MO}$ of the main nozzle 1 is retarded 2 ° in the loom main shaft angle relative to the present set value in order to shorten a prior ejection (air ejection prior to weft yarn projection) time duration, while the ejection initiation timing $T_{SO}$ of the auxiliary nozzle 11 is similarly retarded 2° relative to the present set value. In case of NO, the flow goes to a step 45A.

At a step 45A, a judgment is made as to whether $O_{MAX} = O_3$ or not. In case of YES, it is assumed that the critical degree of the faulty shedding operation is high so as to establish a tendency of occurrence of the faulty shedding operation, and therefore the flow goes to a step 46A. Then, the withdrawal timing (the weft picking initiation timing) $T_{CO}$ of the measuring pin 9 is retarded 2° in order to prevent the weft yarn from being caught by the warp yarns. In case of NO, the flow goes to a step 47A.

At the step 47A, a judgment is made as to whether $O_{MAX} = O_4$ or not. In case of YES, it is assumed that the critical degree of the weft yarn breakage at the base is high so as to establish a tendency of occurrence of the weft yarn breakage at the base, and therefore the flow goes to a step 48A. Then, the ejection pressure $P_s$ of the auxiliary nozzle 11 is reduced 2% (x 0.98) relative to the present set value, while the ejection termination timing $T_{MC}$ of the main nozzle 1 is advanced 2° relative to the present set value. In case of NO, the flow goes to a step 49A.

At the step 49A, a judgment is made as to whether $O_{MAX} = O_5$ or not. In case of YES, it is assumed that the critical degree of the weft yarn tip end entangled is high so as to establish a tendency of occurrence of the weft yarn tip end entangled, and therefore the flow goes to a step 50. Then, the ejection pressure $P_M$ of the main nozzle 1 is increased 5% (x 1.05), while the ejection pressure $P_s$ of the auxiliary nozzle 11 is increased 5% (x 1.05). In case of NO, the flow goes to a step 51A.

In case that the flow goes to the step 51A, necessarily the relationship of $O_{MAX} = O_6$ is established so that the critical degree of the weft yarn kinky state is high. However, this depends on the tendency of the weft yarn breakage at the base or on the tendency of the weft yarn tip end entangled. Therefore, here, a judgment is made as to whether the tendency is one-sided to the weft yarn breakage at the base or to the weft yarn tip end entangled by comparing the critical degree $O_4$ of the weft yarn breakage at the base and the critical degree $O_5$ of the weft yarn tip end entangled.

In case that the critical degree $O_4$ of the weft yarn breakage at the base is higher than the other, the flow goes to a step 52A. Then, the ejection termination timing $T_{MC}$ of the main nozzle 1 is advanced 2°, while the ejection termination timing $T_{SC}$ of the auxiliary nozzle 11 is retarded 2°. In case that the critical degree 05 of the weft yarn tip end entangled is higher than the other, the flow goes to a step 53A. Then, the ejection pressure $P_M$ of the main nozzle 11 is increased 5% (x 1.05), while the ejection pressure Ps of the auxiliary nozzle 11 is increased 5% (x 1.05).

Accordingly, it becomes possible to automatically cope with the predicted trouble factor and thereby to achieve an optimum operation of the loom.

While the trouble predicting device has been described as being arranged to be controlled by such a logic, it will be understood that it may be arranged such that control objects and their control amounts are calculated by a fuzzy inference.

Although the two-dimensional CCD has been shown and described as being used as means for picking up the image of the weft yarn in this embodiment, it will be understood that a one-dimensional CCD which is called a "line sensor" may be used to be disposed in a direction perpendicular to the flight direction of the weft yarn, in which a plurality of image pickup operations (scannings) are made to obtain time series data thereby detecting the behavior (change in weft yarn position or deflection), upon which the weft picking condition is judged.

Additionally, in case of the two-dimensional CCD, it may be done that a plurality of image pickup operations are made to detect not only the flight form of the weft yarn but also the behavior of the weft yarn, upon which the weft picking condition is judged.

Furthermore, a solid image pickup element (for example, that of the MOS type) other than CCD may be used as the means for picking up the weft yarn image. Besides, an arrangement in which a plurality of photoelectric sensors are arranged matrix-like or linear may be used as the same means.

As discussed above, according to this embodiment, a weft yarn image is obtained by picking up the image of the weft yarn during the weft picking. In accordance with the flight form or behavior of the weft yarn depending upon the weft yarn image, a weft picking condition is judged thereby making a warning and/or a control. By this, the condition of the weft yarn can be more precisely recognized thus making a right warning and/or control.

Additionally, it is possible to predict weft picking troubles (for respective factors) which will occur in the future, from the present flight form or the like of the weft yarn. In this case, an optimum weft picking control is made possible particularly by controlling to change the weft picking conditions in accordance with the critical degree of each weft picking trouble factor in the weft picking control system for the loom.

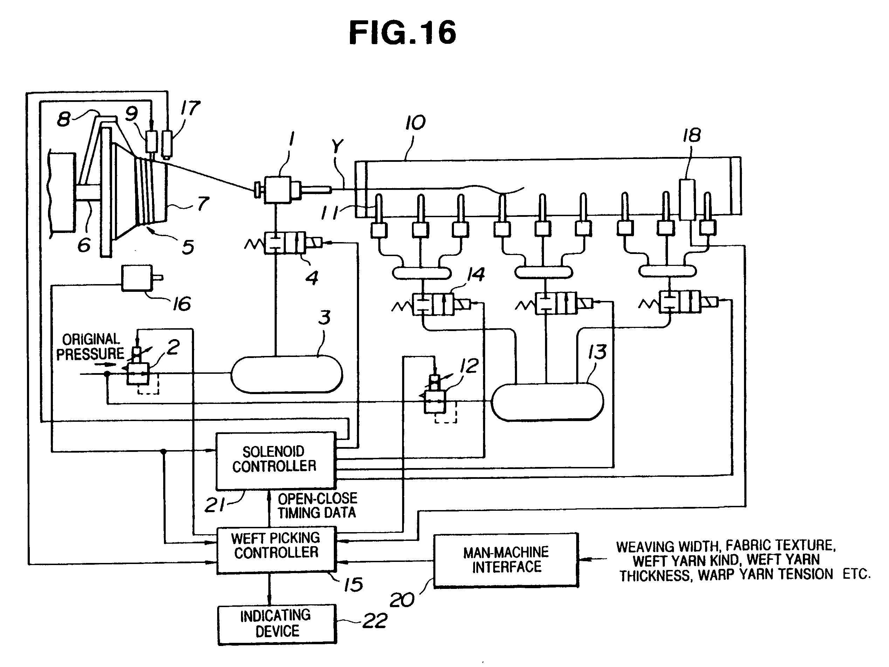

Next, a third embodiment of the present invention will be discussed with reference to Figs. 15 to 18.

This embodiment is similar to the first embodiment and therefore explanation of corresponding parts is omitted. The embodiment is arranged as follows:

The weft picking controller 15 determines an ejection initiation timing $T_{MO}$ and an ejection termination timing $T_{MCO}$ of the main nozzle 1, a pin withdrawal timing $T_{CO}$ of the measuring pin 9, an ejection initiation timing $T_{SO}$ ($T_{SO1}$, $T_{SO2}$, ...) and an ejection termination timing $T_{SC}$ ($T_{SC1}$, $T_{SC2}$, ...) of each group of the auxiliary nozzles 11, and sets these opening and closing timing data at a solenoid controller 21.

Furthermore, the weft picking controller 15 watches the signal from the weft reaching sensor 18. In the event that no weft reaching signal is obtained from the weft reaching sensor 18 in a predetermined loom main shaft angle range, a judgment is made as being occurrence of a mispick, and therefore the loom is stopped through a loom stopping circuit (not shown).

To the weft picking controller 15, an indicating device such as a CRT display and/or the like are connected in order to indicate an initial set value in accordance with an initial setting of weft picking condition as discussed after.

Subsequently, explanation will be made on a control system of the loom, of this embodiment, and particularly on a device for making the initial setting of the weft picking condition.

The device is constituted of a microcomputer in the weft picking controller 15 and arranged as follows: A plurality of parameters representing a weaving condition of the loom are respectively converted into numerical values and input to the device. A neural network calculates control amounts (initial values) in accordance with the sum total of products each of which is of the input value of each parameter and a weight (coefficient of coupling) for each of predetermined control objects of the weft picking control, and outputs the control amounts thereby accomplishing an initial setting of the weft picking condition.

Here, the control objects are an ejection pressure $P_M$ of the main nozzle 1, an ejection pressure $P_S$ of the auxiliary nozzles 11, an ejection initiation timing $T_{MO}$ of the main nozzle 1, an ejection termination timing $T_{MC}$ of the main nozzle 1, an ejection initiation timing $T_{SO1}$ of a first group of the auxiliary nozzles 11, an ejection termination timing $T_{SC1}$, an ejection initiation timing $T_{SO2}$ of a second group of the auxiliary nozzles 11, an ejection termination timing $T_{SC2}$ of the second group of the auxiliary nozzles 11, ....., the withdrawal timing $T_{CO}$ of the measuring pin 9, in which the number of the control objects is n. The control amount (initial set value) of each control object will be calculated. The first group auxiliary nozzles 11 are closer to the main nozzle 1 than the second group auxiliary nozzles 11.

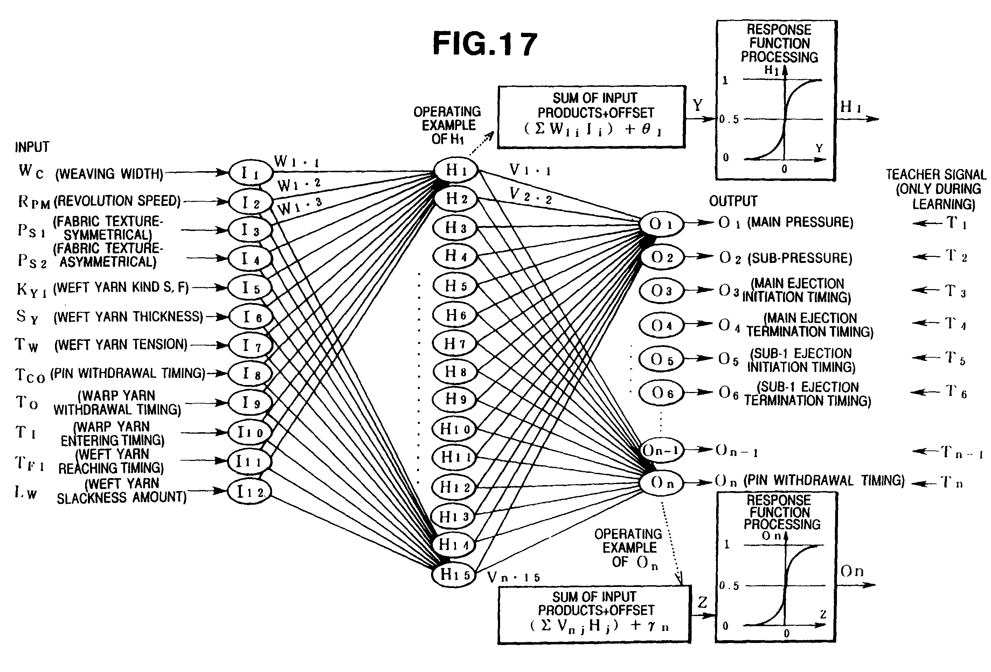

Fig. 17 shows a control amount calculating neural network which uses a hierarchical network including three layers such as an "input layer", an "intermediate layer", and an "output layer".

To 12 units ($I_1$ to $I_{12}$) in the input layer, the following items are respectively input upon being converted to numerical values: a weaving width $W_C$, the loom revolution speed $R_{PM}$, a fabric texture - symmetrical (between right and reverse sides) $P_{S1}$, a fabric texture - asymmetrical $P_{S2}$, a kind of weft yarn $K_{Y1}$, a weft yarn thickness $S_Y$, a warp yarn tension $T_W$, a measuring pin withdrawal timing $T_{CO}$, a warp yarn withdrawal timing $T_O$, a warp yarn entry timing $T_I$, a weft yarn reaching (to the counter-weft picking side) timing $T_{F1}$, and a weft yarn slackness amount $L_W$.

Here, the weaving width $W_C$ is input, for example, in millimeter as unit by a man. The fabric texture: symmetrical $P_{S1}$ is, for example, $P_{S1} = 1$ if symmetrical, and $P_{S1} = 0$ if asymmetrical. The fabric texture: asymmetrical $P_{S2}$ is, for example, $P_{S2} = 1$ if asymmetrical, and $P_{S2} = 0$ if symmetrical. The fabric textures are input by a man. The kind of weft yarn - spun yarn $K_{Y1}$ is, for example, $K_{Y1} = 1$ if spun yarn is used, and $K_{Y1} = 0$ if filament yarn is used. The kind of weft yarn is input by a man. The weft yarn thickness $S_Y$ is input in denier as unit by a man; however a sensor in a yarn supply section may be used. The warp yarn tension $T_W$ is input by a man; however, a sensor in a back-rest roller section may be used. As the measuring pin withdrawal timing $T_{CO}$, a set value (standard value) is input. The warp yarn withdrawal timing $T_O$ and the warp yarn entry timing $T_I$ represent respectively a timing at which the weft guide passage formed in the reed is withdrawn from a warp shed and a timing at which the weft guide passage enters the warp shed, in which a time duration (depending upon a shedding characteristics) in which a weft picking is possible can be known from the two timings. The two timings are input by a man; however, they may be detected by a sensor disposed aside the weft guide passage. The weft reaching timing $T_{F1}$ is inputted by a man but may be detected in response to a signal from the weft reaching sensor 18 to be inputted. The weft yarn slackness amount $L_w$ is input by a man but may be detected as a time difference between the final (weft yarn) unwinding signal from the weft unwinding sensor 17 and the reaching signal from the weft reaching sensor 18 to be input.

Accordingly, the followings are established: $I_1 = W_C$, $I_2 = R_{PM}$, $I3 = P_{S1}$, $I_3 = P_{S2}$, $I_4 = P_{S2}$, ..... $I_{12} = Lw$.

These values are obtained from the past weaving data or inputted by signals from sensors, in which the numerical values of data formed into pattern in accordance with informations such as the specification of a fabric in process may be transmitted from a host computer to the neural network. The numerical values may be partly omitted if it is permitted to slightly lower the accuracy of calculated outputs $O_1$ to $O_n$.

To each of 15 units ($H_1$ to $H_{15}$) in the intermediate layer, the signals $I_1$ to $I_{12}$ are input from all the units in the input layer.

In each unit in the intermediate layer, the sum total of the products each of which is of each input and a weight is calculated; an offset is added to the sum total to obtain an added value; and then a response function processing is made on the added value by using a sigmoid function, thereby obtaining output values $H_1$ to $H_{15}$ within a range of O to 1.

Here, an operating example of $H_1$ will be explained. The sum total of the products each of which is of each input $I_i$ and the weight $W_{1i}$. The offset $\theta_1$ is added to the sum total to make a calculation of $Y = (\Sigma W_{1i} \cdot I_i) + \theta_1$ where i = 1 to 15. Subsequently, a response function processing is carried out using a sigmoid function thereby to obtain $H_1 = f(Y)$.

The sigmoid function is a simple and non-decreasing function within a range in which an output is 0 to 1. The sigmoid function is reflective of the character of saturated reaction of actual neuron.

Accordingly, $H_j = f((_i\Sigma W_{ji} \cdot I_i) + \theta_j)$ where i = 1 to 15, and j = 1 to 15.

To each of n units ($O_1$ to $O_n$), signals H1 to H15 are input from all the units in the intermediate layer.

In each unit in the output layer, similarly to the above, the sum total of the products each of which is of each input and a weight is calculated. An offset is added to the sum total to obtain an added value. Then, a response function processing is made on this added value by using a sigmoid function so as to obtain output values $O_1$ to $O_n$ within a range of 0 to 1.

Here, an operating example of $O_n$ will be explained. The sum total of the products each of which is of each input Hi and a weight $V_{6j}$ is calculated. The offset $\gamma_n$ is added so as to calculate $Z = (\Sigma V_{6j} \cdot H_j) + \gamma_n$ where j = 1 to 15. Subsequently, the response function processing is made using a sigmoid function thereby to obtain $O_n = f(Z)$.

Accordingly, $O_k = f((_j\Sigma W_{kj} \cdot H_j) + \gamma_k)$ where j = 1 to 15, and k = 1 to 6.

Here, $O_1$ to $O_n$ are respectively represented as numerical values (within a range from 0 to 1) corresponding to the control amounts (initial set values) which are respectively for the control objects of the weft picking control.

$O_1$ represents the ejection pressure $P_M$ of the main nozzle 1, $O_2$ the ejection pressure $P_S$ of the auxiliary nozzles $P_S$, $O_3$ the ejection initiation timing $T_{MO}$ of the main nozzle 1, $O_4$ the ejection termination timing TMC of the main nozzle 1, $O_5$ the ejection initiation timing TSO1 of the first group auxiliary nozzles 11, $O_6$ the ejection termination timing $T_{SC1}$ of the first group auxiliary nozzles 11, ....., and $O_n$ the withdrawal timing $T_{CO}$ of the measuring pin 9.

It is to be noted that since $O_1$ to $O_n$ are within the range of 0 to 1, actual control amounts (initial set values) are respectively calculated at $O_1$ to $O_n$ in conversion tables which are respectively for the control objects, and outputted. In each conversion table, the control amount is 0 in minimum and 1 in maximum.

As discussed above, the initial setting is made for the ejection pressure $P_M$ of the main nozzle 1, the ejection pressure $P_S$ of the auxiliary nozzles $P_S$, the ejection initiation timing $T_{MO}$ of the main nozzle 1, the ejection termination timing $T_{MC}$ of the main nozzle 1, the ejection initiation timing $T_{SO1}$ of the first group auxiliary nozzles 11, the ejection termination timing $T_{SC1}$ of the first group auxiliary nozzles 11 ....., and the withdrawal timing $T_{CO}$ of the measuring pin 9.

By the above, the initial setting can be automatically accomplished to obtain an optimum weft picking condition suitable for a weaving condition on the assumption that the above-mentioned weight and offset are optimized according to learning discussed after.

Next, a method of the learning will be discussed.

That is, it has been experimentally gotten that there are optimum weft picking conditions for at least some weaving conditions. Therefore, inputs $I_1$ to $I_{12}$ corresponding to the respective gotten weaving conditions are provided. Then, teacher signals $T_1$ to $T_6$ are provided to the outputs $O_1$ to $O_n$ under the input condition. Learning is made for the weight and the offset in order that the outputs $O_1$ to $O_n$ are respectively brought into agreement with the teacher signals $T_1$ to $T_n$.

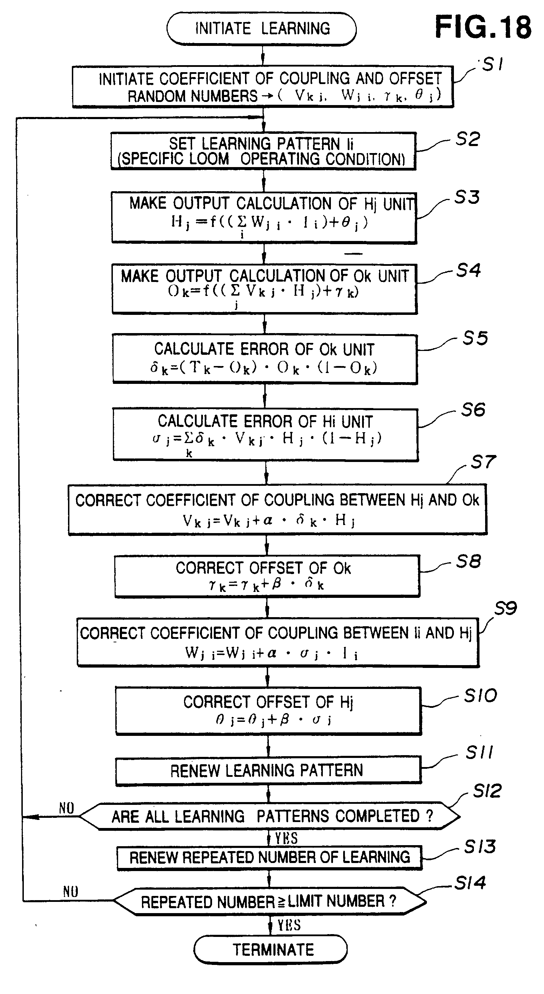

The procedure of this learning will be discussed with reference to a flowchart of Fig. 18. This instance is a back propagation learning using a steepest descent method.

At a step 1B (indicated as "S1B" in Fig. 18; similarly, steps 2 to 14 are respectively indicated as "S2B to S14B" in Fig. 18), weights (referred hereafter to as "coefficient of coupling") $V_{kj}$, $W_{ji}$ and offsets $\gamma_k$, $\theta_i$ are initialized. These may be given by random numbers.

At a step 2B, setting a learning pattern $I_i$ ($I_1$ to $I_{15}$) is made. That is, setting is made at a specific loom operating condition corresponding to either one of the good state, the weft yarn breakage upon air ejection, the faulty setting operation, the weft breakage at the base, the weft yarn tip end entangled and the weft yarn kinky state.

At a step 3B, an output calculation of $H_j$ unit is made according to the below-mentioned equation.

$$H_j = f(({}_i\Sigma W_{ji} \bullet I_i) + \theta_j)$$

At a step 4B, an output calculation of the Ok unit is made according to the below-mentioned equation.

$$O_k = f(({}_j\Sigma V_{kj} \bullet H_j) + \gamma_k)$$

At a step 5B, an error $\delta_k$ of the $O_k$ unit is calculated according to the below-mentioned equation.

$$\delta_k = (T_k - O_k) \bullet O_k \bullet (1 - O_k)$$

where $T_k$ is a teacher signal corresponding to the already set learning pattern.

At a step 6B, an error $\sigma_j$ of the $H_j$ unit is calculated according to the below-mentioned equation.

$$\sigma_j = {}_k\Sigma \delta_k \bullet V_{kj} \bullet H_j \bullet (1 - Hj)$$

At a step 7B, correction of the coefficient of coupling of the $H_j$ unit and the $O_k$ unit is made according to the below-mentioned equation.

$$V_{kj} = V_{kj} + \alpha \bullet \delta_k \bullet H_j$$

(where $\alpha$ is a constant)

At a step 8B, correction of the offset $\gamma_k$ of the Ok unit is made according to the below-mentioned equation.

$$\gamma_k = \gamma_k + \beta \bullet \delta_k$$

(where $\beta$ is a constant)

At a step 9B, correction of the coefficient of coupling in the $I_i$ unit and the $H_j$ unit is made according to the below-mentioned equation.

$$W_{ji} = W_{ji} + \alpha \bullet \sigma_j \bullet I_i$$

(where $\alpha$ is a constant)

At a step 10B, correction of the offset $\theta_j$ in the $H_j$ unit is made according to the below-mentioned equation.

$$\theta_j = \theta_j + \beta \bullet \sigma_j$$

(where $\beta$ is a constant)

At a step 11B, the learning pattern $I_i$ (I1 to $I_{15}$) is renewed.

At a step 12B, a judgment is made as to whether all the learning patterns (i.e., at least six learning patters which respectively correspond to the good state, the weft yarn breakage upon air ejection, the faulty shedding operation, the weft breakage at the base, the weft yarn tip end entangled and the weft yarn kinky state) are completed or not. In case of NO, a flow returns to the step 2B. In case of YES, the flow goes to a step 13B.

At the step 13B, the repeated number of the learning is renewed (counted up).

At a step 14B, a judgment is made as to whether the repeated number $\geqq$ a limit number or not. In case of NO, the flow returns to the step 2. In case of YES, the learning is terminated.

The method of the back-propagation learning (particularly a correction manner for the coefficient of coupling) is the same as that in the first embodiment.

It may be possible that the neural network is used in a manner to correct the weft picking condition during the loom operation by providing suitable teacher signals during the loom operation.

Additionally, the neural network can be applied to accomplish a variety of controls other than the weft picking control.

As discussed above, according to this embodiment, rules are found from the learning depending upon the past experiences by using the neural network. The control amounts are calculated in accordance with the rules and therefore the optimum control amounts can be set for any weaving condition, thereby making possible to conduct the optimum operation of the loom.

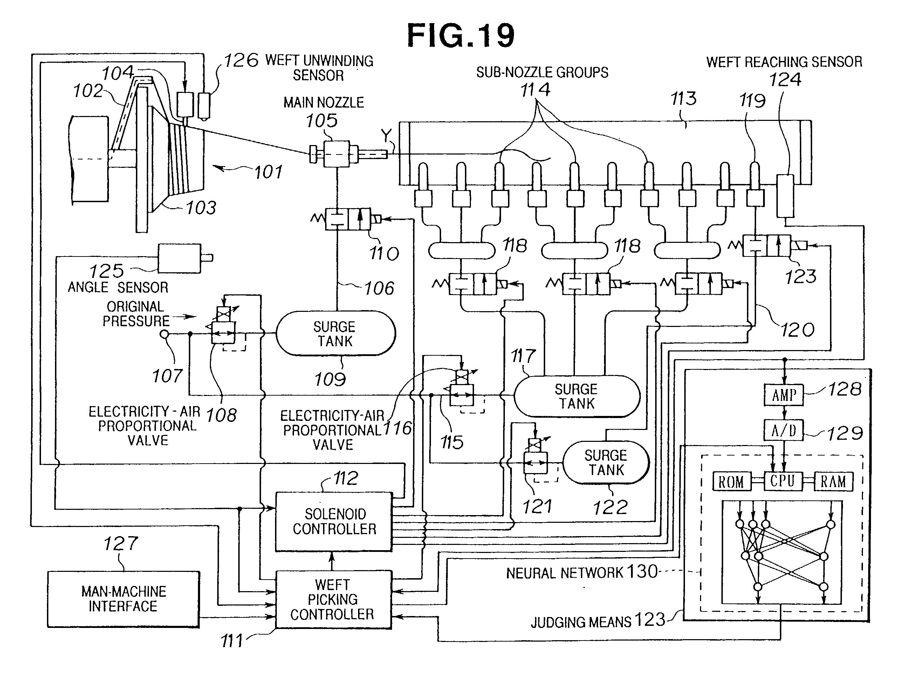

Fig. 19 illustrates a weft picking control system of a loom, as a fourth embodiment of the present invention.

In Fig. 19, the weft yarn Y is from a yarn supply member (not shown) and passes through the inside of a winding arm 102 of a weft measuring and storing device 101. The weft yarn Y is wound on the peripheral surface of a drum 103 of the weft measuring and storing device 101 upon a relative rotation between the winding arm 102 and the drum 103 thereby to be stored, in which the weft yarn Y is threaded in a main nozzle 105 upon being engaged with an engaging pin (nail) 104 inserted in the peripheral surface of the drum 103.

An air supply line 106 for the main nozzle 105 includes an electricity-air proportional valve 108 as a pressure control valve, a surge tank 109 and an electromagnetic and self-reset type open-close valve 110 which are arranged successively in a direction from the side of an original pressure 107 to the side of the main nozzle 105. The electricity-air proportional valve 108 is adapted to automatically pressure-control the pressure value of air stored in the surge tank 109 in accordance with an output signal from a weft picking controller 111 so that the pressure value becomes equal to a set value preset in the weft picking controller 111. The open-close valve 110 makes its open and close actions to eject pressurized air from the main nozzle 105 under the action of the output power from a solenoid controller 112 operated by the output signal from the weft picking controller 111 and under the action of a return spring disposed inside the open-close valve 110.

Sub-nozzle groups 114 for weft picking are grouped into a plurality of blocks and disposed on a reed 113 at the cloth fell side. An air supply line 115 of the sub-nozzle groups 114 includes an electricity-air proportional valve 116, a surge tank 117 and a plurality of electromagnetic and self-reset type open-close valves 118 which are provided corresponding to the sub-nozzle groups 114, which are successively arranged in a direction from the side of the above-mentioned original pressure 107 to the side of the plural sub-nozzle groups 114. The electricity-air proportional valve 116 is adapted to automatically pressure-control the pressure value of air stored in the surge tank 117 in accordance with an output signal from a weft picking controller 111 so that the pressure value becomes equal to a set value preset in the weft picking controller 111. The plural open-close valves 118 make their open and close actions with predetermined open and close time duration successively in a direction from the weft picking side to the counter-weft picking side, the open and close actions of each open-close valve 118 being made under the action of output power from the solenoid controller 112 and under the action of a return spring disposed inside the open-close valve 118. Under opening of the plural open-close valves 118, the plural sub-nozzle groups 114 make their relay-ejection of pressurized air in a manner to follow the flying tip end section of the weft yarn Y. Under this relay-ejection of pressurized air from the sub-nozzle groups in the direction from the weft picking side to the counter-weft picking side, the weft yarn Y flies through a warp shed opening from the weft picking side to the counter-weft picking side, passing an air guide (not shown) formed in the reed 113, thereby to make its weft picking.

A stretch nozzle 119 is disposed on the reed 113 at the cloth fell side and located on the counter-weft picking side relative to the last subnozzle group 114 which is located on the extreme counter-weft picking side. The stretch nozzle 119 is adapted to support the tip end section of the weft yarn Y by air stream ejected therefrom in order to provide a suitable tension to the weft yarn Y until a beating-up operation is made after the weft yarn Y picked inside the warp shed opening reaches the counter-weft picking side. An air supply line 120 of the stretch nozzle 119 includes an electricity-air proportional valve 121 as a pressure control valve, a surge tank 122 and an electromagnetic and self-reset type open-close valve 123 which are arranged in a direction from the side of the above-mentioned original pressure 107 to the side of the stretch nozzle 119.

A weft reaching sensor 124 is disposed on the reed 113 at the cloth fell side and located on the counter-weft picking side relative to the stretch nozzle 119. The weft reaching sensor 124 constitutes detecting means for detecting the behavior of the weft yarn Y until the weft yarn Y picked into the warp shed opening is woven in the warp yarns after reaching the counter-weft picking side. In more detail, this weft reaching sensor 124 is a photoelectric sensor such as a reflector type photoelectric sensor, in which the light receiving amount of the sensor changes depending upon the waving action of weft yarn Y due to the extension and contraction of the weft yarn Y. The weft reaching sensor 124 is adapted to output signals which are different in output level in accordance with the changed light receiving amount, to the weft picking controller 111 and to judging means 123.

The weft picking controller 111 is adapted as follows: The input timing of the output signal of the weft reaching sensor 124 is replaced with the rotational angular position from an angle sensor 125. A difference is calculated between the detected reaching timing as the replaced rotational angular position and a set reaching timing which has been preset as a standard value in the controller 111. The difference is fed back to the set reaching timing which has been determined in accordance with a loom revolution speed and a weaving width which are input through a man-machine interface 127 by an operator during the preparation operation for a loom operation, thereby controlling weft picking conditions such as the withdrawal timing of the engaging pin 104, the ejection timing of the main nozzle 105, the ejection pressures and ejection timings of the sub-nozzle groups 114, and the ejection pressure and ejection timing of the stretch nozzle 119 in the next weft picking.

The judging means 123 includes an amplifier 128 for amplifying the output signal from the weft reaching sensor 124, an analog-to-digital converter (referred hereinafter to as "A/D converter") for digitizing the output signal from the amplifier 128 to discrete values, and a computer constituting a neural network 130 adapted to compare the wave-form data output from the A/D converter with a preset normal wave-form data thereby to make a judgment.

The A/D converter 129 is adapted to make sampling the output signal from the amplifier 128 at intervals of 1 degree during a predetermined time (for example, 205 degrees to 355 degrees) from a timing at which the tip end section of the weft yarn Y reaches the counter-weft picking side and a timing at which the weft yarn is woven in the warp yarns, so that the output signal from the amplifier 128 is digitized into 150 discrete value data $d_1$ to $d_{150}$. The 150 discrete data are stored in a data memory RAM of the computer 130. The output of the neural network 130 is input to the weft picking controller 111.

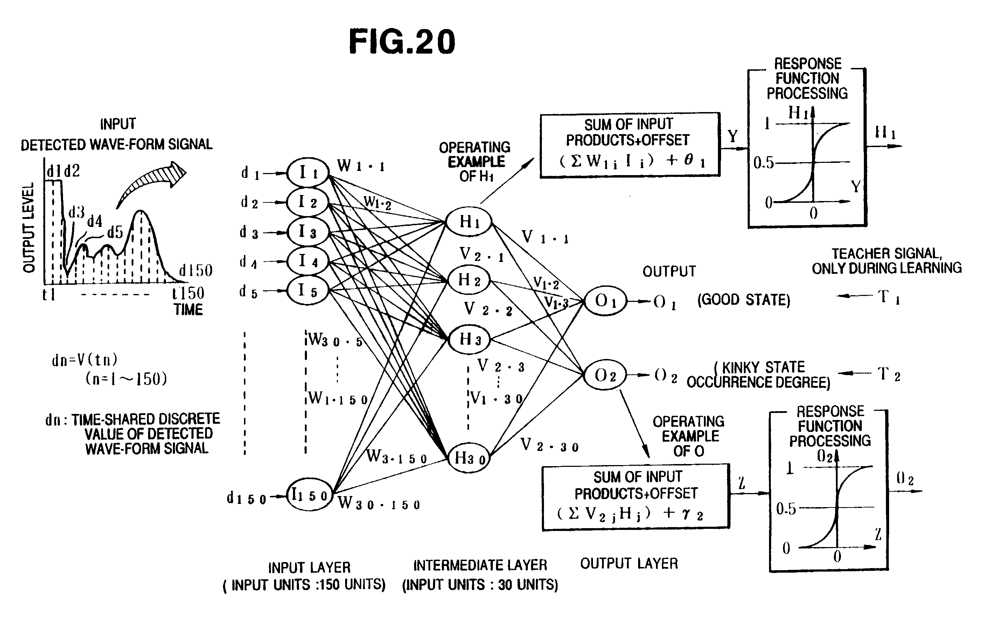

Fig. 20 shows a model of the neural network 130. In Fig. 20, the neural network is of a hierarchical network model including a input layer, an intermediate layer and an output layer.

The input layer is constituted of 150 input units $I_i$ (i = 1 to 150). The corresponding discrete value data $d_i$ (i = 1 to 150) from the A/D converter 129 are respectively input to the 150 input units.

The intermediate layer is constituted of 30 intermediate units $H_j$ (j = 1 to 30). All the signals Ii from the input units Ii are input to each of the 30 intermediate units $H_j$. In the intermediate unit $H_j$, the following calculation is made: The sum total of products each of which is of the signal $I_i$ from each input unit $I_i$ and a weighting factor is calculated; an offset value $\theta_j$ is added to this sum total to obtain an added value; and a response function processing is made on the added value by using a sigmoid function thereby obtaining an output value $H_i$ within a range of 0 to 1. For example, an operating example of the intermediate unit $H_1$ will be discussed. The sum total of products each of which is of each input signal $I_i$ and a weighting factor $W_{ji}$ is calculated. The offset value $\theta_1$ is added to the sum total thereby obtaining $Y = (\Sigma W_{1i} \cdot I_i) + \theta_1$. The sigmoid function is applied to this added value to determine $H_i = f(Y)$. The sigmoid function is a simple and non-decreasing function within a range in which an output is 0 to 1. The sigmoid function is reflective of the character of saturated reaction of actual neuron. Accordingly, the output value of each intermediate unit $H_i$ becomes $H_j = f\{(_i\Sigma W_{ji} \cdot I_i) + \theta_j)\}$ where i = 1 to 150, and j = 1 to 30.

The output layer is constituted of two output units $O_k$ (k = 1 or 2). All the signals $H_j$ from the intermediate units $H_j$ is input to each of the two output units $O_k$. In the output unit $O_k$, the following calculation is made: the sum total of products each of which is of the signal $H_j$ from the intermediate unit $H_j$ and a weighting factor $V_{kj}$ is calculated; an offset value $\gamma_k$ is added to this sum total to obtain an added value; and a response function processing is made on this added value by using the sigmoid function thereby obtaining an output value $O_k$ within a range from 0 to 1. For example, an operating example of the output unit $O_2$ is discussed. The sum total of products each of which is each input signal $H_j$ and a weighting factor $V_{2j}$ is calculated. An offset value $\gamma_2$ is added to this sum total thereby determining $Z = (\Sigma V_{2j} \cdot H_j) + \gamma_2$. The sigmoid function is applied to this added value thereby determining $O_2 = f(Z)$. The sigmoid function is reflective of the character of saturated reaction of actual neuron. Accordingly, the output value of each output unit $O_k$ is $O_k = f\{(_j\Sigma V_{kj} \cdot H_j) + \gamma_k\}$ wherein j = 1 to 30, and k = 1 or 2.

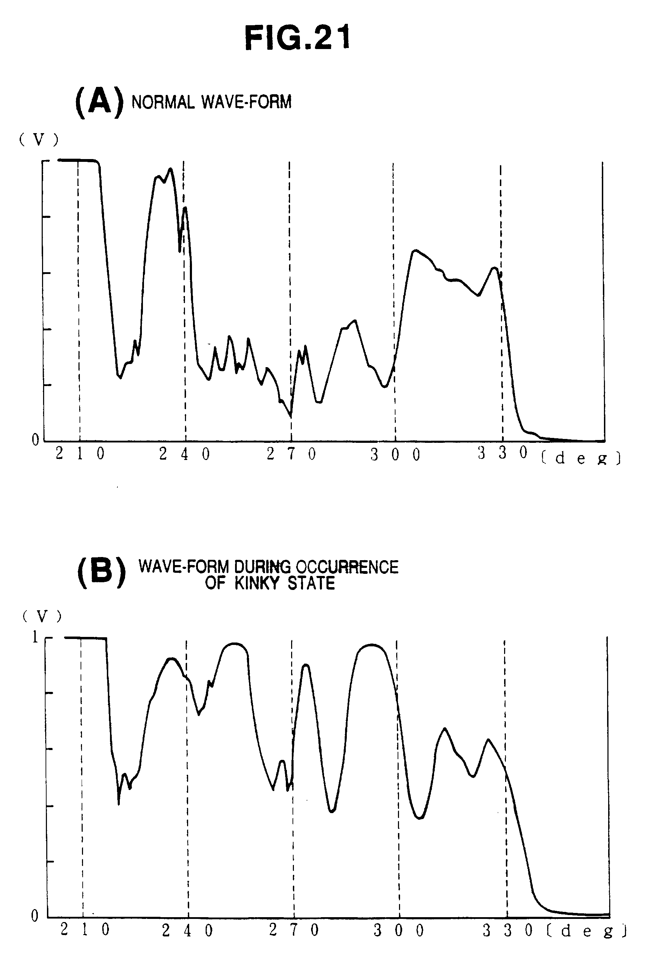

That is, the value of the output unit $O_1$, $O_2$ is numerical value of the degree of good or bad condition in behavior of the weft yarn Y, in which 0 < Ok < 1 where k = 1 or 2. According to this, the value of $O_1$ becomes the maximum in a normal signal wave-form while the value of $O_2$ becomes large in a signal wave-form at which the kinky state occurs thereby predicting occurrence of the kinky state, on the assumption that the weighting factor $W_{ji}$, $V_{kj}$ and the offset values $\theta_j$, $\gamma_k$ are respectively at optimum values by using a learning discussed after. Explanation is made with reference to concrete wave-from data of Fig. 21 - (A) and (B) in which a main shaft rotational angle is taken on the axis of abscissas while output voltage of the weft reaching sensor is taken on the axis of ordinates. Here, on the convenience of a circuit, 1 (V) corresponds to 0 in reflected light amount of the weft yarn while 0 (V) corresponds to the maximum value in reflected light amount of the weft yarn. The wave-form shown in Fig. 21 - (A) is a wave-form in a normal state so that the fabric quality is good, in which the value of the output unit $O_1$ is $0.5 < O_1 < 1.0$ while the value of the output unit $O_2$ is $0 < O_2 < 0.5$. In case of the wave-from shown in Fig. 21 - (B), the returning action of the weft yarn Y is larger than that in the normal state during the time period between 240 (deg.) and 300 (deg.) in the main shaft angle, in which the kinky state occurs. At this time, the value of the output unit $O_1$ is $0 < O_1 < 0.5$ while the value of the output unit $O_2$ is $0.5 < O_2 < 1.0$. Accordingly, the tendency of occurrence of the kinky state can be gotten in accordance with the large and small value relationship between the output values of the output units $O_1$, $O_2$.

Next, a method of the learning for setting the weighting factor $W_{ji}$, $V_{kj}$, and the offset values $\theta_j$, $\gamma_k$ respectively at optimum values will be discussed.

There is a back-propagation method as a learning method in the hierarchical type neural network 130. This is a method in which the weighting factor $W_{ji}$, $V_{kj}$ and the offset value $\theta_j$, $\gamma_k$ are corrected in a direction from the output layer to the input layer in a manner to reduce the square sum of the error between an actual output data and a teacher data which are provided as a standard.

According to this fourth embodiment, the teacher data $(T_1, T_2)$ corresponding respectively to the outputs $O_1$, $O_2$ are input under the operation of the man-machine interface 127. For example, "(1.0, 0)" are used as the teacher data OK $(T_1, T_2)$ in the case of the normal wave-form, while "(0, 1.0)" are used as the teacher data NG $(T_1, T_2)$ in the case of the wave-form representing occurrence of the kinky. With respect to actual input data for learning, operation of the loom is made under two conditions, i.e., a normal weft picking condition-and a condition in which the kinky state occurs, in which the wave-form data under the respective conditions are measured and inputted to the input unit $I_i$. Additionally, the teacher data $(T_1, T_2)$ are respectively provided to the outputs $O_1$, $O_2$ under the respective conditions. Then, the weighting factors $W_{ji}$, $V_{kj}$ and the offset values $\theta_j$, $\gamma_k$ are corrected in a manner to reduce the error between the output data $(O_1, O_2)$ and the teacher data $(T_1, T_2)$. While the learning has been described as being made in a on-line manner, it will be understood that it may be made by memorizing the weight factor $W_{ji}$, $V_{kj}$, and the offset values $\theta_j$, $\gamma_k$ in a memory RAM after learning is made in an off-line manner.

As a result of the learning, the neural network having the specified weighting factor $W_{ji}$, $V_{kj}$ of coupling and the offset values $\theta_j$, $\gamma_k$ clearly judging difference in wave-form detected during an actual weaving operation. That is, in case that the detected wave-form in the actual weaving operation is close to the normal wave-form, the data $(O_1, O_2)$ of the output unit are close to the teacher data OK $(T_1, T_2)$. In case that the detected wave-form is close to the wave-form occurring the kinky state, the data $(O_1, O_2)$ of the output unit are close to the teacher data NG $(T_1, T_2)$. By this, detection as to whether the kinky state occurs or not can be made according to the present weft picking condition. The output data from this neural network 130 are inputted to the weft picking controller 111, upon which the weft picking condition is changed if the kinky state occurs. For example, the changing the weft picking condition is accomplished by retarding the ejection termination timing of the last sub-nozzle group 14 by $\Delta_t$ or by increasing the ejection pressure of the stretch nozzle 119.

In case that the kinky state occurs, the output data of the neural network 130 may be outputted to warning means such as a lamp device (not shown) thereby to generate a warning.

In place of the system in which the neural network (130) is simulated under program-control of the computer, a system in which the neural network is constituted of neuron elements may be used.

As discussed above, according to this embodiment, the behavior of the weft yarn is detected until the weft yarn is woven in the warp yarns after reaching the counter-weft picking side during the weft picking thereby detecting the wave-form data. The detected wave-form data are compared with the preset normal wave-form data. As a result of this comparison, a judgment is made as to whether there is a fabric defect or not. Accordingly, the weft sensor is simplified in construction and improved in detection accuracy. Additionally, an operation for adjusting the installation location of the weft sensor becomes unnecessary even if kind of the weft yarn is changed.

**Claims**

1.  A system for controlling a loom, comprising:
        neural network control means comprising:

        weaving condition input means for receiving a plurality of parameters ($K_{Y1}$, $K_{Y2}$, $P_{S1}$, $P_{S2}$, $S_Y$, $T_{CO}$, $T_{F1}$, $T_I$, $T_O$, $T_W$, $T_{WF}$, $T_{Y1}$, $T_{Y2}$, $T_{Y3}$, $W_C$; $d_{(1,1)}$,..., $d_{(11,9)}$, $R_{PM}$, $W_C$; $K_{Y1}$, $L_W$, $P_{S1}$, $P_{S2}$, $R_{PM}$, $S_Y$, $T_{CO}$, $T_{F1}$, $T_I$, $T_O$, $T_W$, $W_C$; $d_1$,..., $d_{150}$) representing a weaving condition of said loom,
        calculation means (30) for generating a calculation result ($O_1$,..., $O_6$; $O_1$,..., $O_n$; $O_1$,..., $O_2$) according to a sum total of products, each product comprising a value ($I_1$,..., $I_{15}$; $I_1$,..., $I_{101}$; $I_1$,..., $I_{12}$; $I_1$,..., $I_{150}$) of a parameter of said plurality of parameters and an associated weight of a plurality of weights ($W_{(1,1)}$,..., $W_{(15,15)}$; $W_{(1,1)}$,..., $W_{(15,101)}$; $W_{(1,1)}$,..., $W_{(15,12)}$; $W_{(1,1)}$,..., $W_{(30,150)}$), and
        means for outputting said calculation result as an output signal.

2.  The system as claimed in claim 1 wherein:
        said neural network control means is adapted so that said output signal represents a critical degree of trouble

EP 0 573 656 B1

occurrence.

3. The system as claimed in claim 1 or 2, further comprising:
   means (2, 4, 14, 21; 2, 4, 12, 14, 16, 21; 8, 10, 12, 18, 23) for changing the weaving condition in accordance with said output signal.

4. The system as claimed in one of claims 1 to 3, further comprising:
   means (22) for outputting a warning signal in accordance with said output signal.

5. The system as claimed in one of claims 1 to 4 wherein:

   said parameters are input to said neural network control means before weaving starts; and
   said weaving condition is set in accordance with said output signal when said weaving starts.

6. The system as claimed in one of claims 1 to 5 wherein:
   said weaving condition is a weft picking condition.

7. The system as claimed in one of claims 1 to 6 wherein:

   said system further comprises:

   pickup means (49) for picking up an image of a weft yarn (Y) at a weft picking; and

   said parameters correspond to said image.

8. The system as claimed in claim 7 wherein:
   said image pickup means (49) is an CCD sensor being adapted to detect said weft yarn (Y) under scanning in a direction traversing a passage through which said weft yarn (Y) flies.

9. The system as claimed in one of claims 1 to 8 wherein:

   said system further comprises:

   means (29) for digitizing a signal wave-form representing the behaviour of a weft yarn (Y) and being detected by a weft feeler (18), until said weft yarn (Y) is woven in warp yarns (W); and

   said parameters have values that are obtained from said signal wave-form.

10. The system as claimed in claim 9 wherein:

    said parameters correspond to said signal wave-form; and
    said system further comprises:

    means for discriminating said signal wave-form in a normal state and
    said signal wave-form in an abnormal state, in accordance with said calculation result.

11. The system as claimed in claim 9 or 10 wherein:
    said weft feeler (18) is a photoelectric weft reaching sensor.

12. The system as claimed in one of claims 1 to 11, further comprising:
    means (20) for receiving at least one parameter of said plurality of parameters from a person.

13. The system as claimed in one of claims 1 to 12 wherein:
    said system receives at least one parameter of said plurality of parameters from a host computer.

14. The system as claimed in one of claims 1 to 13 wherein:

    said neural network control means further comprises:

learning means for adapting said plurality of weights to weaving conditions of said loom.

15. The system as claimed in claim 14 wherein:
said learning means calculates for an input pattern, comprising a particular set of values for said plurality of parameters, a corresponding calculation result, compares said corresponding calculation result to a target pattern, corresponding with said input pattern and comprising a set of target values ($T_1,..., T_6$; $T_1,..., T_n$; $T_1,..., T_2$) for said output signal, and changes weights of said plurality of weights based on said comparison using a learning rule.

16. The system as claimed in claim 14 or 15 wherein:
said learning means uses an error backpropagation learning rule for adapting said plurality of weights.

17. A method of operating a system for controling a loom, said system comprising neural network control means, said method comprising:

receiving a plurality of parameters ($K_{Y1}$, $K_{Y2}$, $P_{S1}$, $P_{S2}$, $S_Y$, $T_{CO}$, $T_{F1}$, $T_I$, $T_O$, $T_W$, $T_{WF}$, $T_{Y1}$, $T_{Y2}$, $T_{Y3}$, $W_C$; $d_{(1,1)},..., d_{(11,9)}$, $R_{PM}$, $W_C$; $K_{Y1}$, $L_W$, $P_{S1}$, $P_{S2}$, $R_{PM}$, $S_Y$, $T_{CO}$, $T_{F1}$, $T_I$, $T_O$, $T_W$, $W_C$; $d_1,..., d_{150}$) representing a weaving condition of said loom,
generating a calculation result ($O_1,..., O_6$; $O_1,..., O_n$; $O_1,..., O_2$) according to a sum total of products, each product comprising a value ($I_1,..., I_{15}$; $I_1,..., I_{101}$; $I_1,..., I_{12}$; $I_1,..., I_{150}$) of a parameter of said plurality of parameters and an associated weight of a plurality of weights ($W_{(1,1)},..., W_{(15,15)}$; $W_{(1,1)},..., W_{(15,101)}$; $W_{(1,1)}..., W_{(15,12)}$; $W_{(1,1)},..., W_{(30,150)}$), and
outputting said calculation result as an output signal.

18. The method as claimed in claim 17 wherein:
said neural network control means is adapted so that said output signal represents a critical degree of trouble occurrence.

19. The method as claimed in claim 17 or 18, further comprising:
changing the weaving condition in accordance with said output signal.

20. The method as claimed in one of claims 17 to 19, further comprising:
outputting a warning signal in accordance with said output signal.

21. The method as claimed in one of claims 17 to 20 wherein:

said parameters are input to said neural network control means before weaving starts; and
said weaving condition is set in accordance with said output signal when said weaving starts.

22. The method as claimed in one of claims 17 to 21 wherein:
said weaving condition is a weft picking condition.

23. The method as claimed in one of claims 17 to 22 wherein:

said method further comprises:
picking up an image of a weft yarn (Y) at a weft picking with an image pickup means (49); and
said parameters correspond to said image.

24. The method as claimed in claim 23 wherein:
said image pickup means (49) is an CCD sensor being adapted to detect said weft yarn (Y) under scanning in a direction traversing a passage through which said weft yarn (Y) flies.

25. The method as claimed in one of claims 17 to 24 wherein:

said method further comprises:

digitizing a signal wave-form representing the behaviour of a weft yarn (Y) and being detected by a weft feeler (18), until said weft yarn (Y) is woven in warp yarns (W); and

said parameters have values that are obtained from said signal wave-form.

**26.** The method as claimed in claim 25 wherein:

said parameters correspond to said signal wave-form; and
said method further comprises:

discriminating said signal wave-form in a normal state and said signal wave-form in an abnormal state, in accordance with said calculation result.

**27.** The method as claimed in claim 25 or 26 wherein:
said weft feeler (18) is a photoelectric weft reaching sensor.

**28.** The method as claimed in one of claims 17 to 27, further comprising:
receiving at least one parameter of said plurality of parameters from a person.

**29.** The method as claimed in one of claims 17 to 28, further comprising.
receiving at least one parameter of said plurality of parameters from a host computer.

**30.** The method as claimed in one of claims 17 to 29, further comprising:
adapting said plurality of weights to weaving conditions of said loom.

**31.** The method as claimed in claim 30, further comprising:

calculating for an input pattern, comprising a particular set of values for said plurality of parameters, a corresponding calculation result;
comparing said corresponding calculation result to a target pattern, corresponding with said input pattern and comprising a set of target values ($T_1$,..., $T_6$; $T_1$,..., $T_n$; $T_1$,..., $T_2$) for said output signal; and
changing weights of said plurality of weights based on said comparison using a learning rule.

**32.** The method as claimed in claim 30 or 31 wherein:
said method uses an error backpropagation learning rule for adapting said plurality of weights.

**Patentansprüche**

**1.** System zum Steuern eines Webstuhls, das umfasst:

eine Neuronennetz-Steuereinrichtung, die umfasst:

eine Webzustand-Eingabeeinrichtung, die eine Vielzahl von Parametern ($K_{Y1}$, $K_{Y2}$, $P_{S1}$, $P_{S2}$, $S_Y$, $T_{CO}$, $T_{F1}$, $T_I$, $T_O$, $T_W$, $T_{WF}$, $T_{Y1}$, $T_{Y2}$, $T_{Y3}$, $W_C$; $d_{(1,1)}$,..., $d_{(11,9)}$, $R_{PM}$, $W_C$; $K_{Y1}$, $L_W$, $P_{S1}$, $P_{S2}$, $R_{PM}$, $S_Y$, $T_{CO}$, $T_{F1}$, $T_I$, To, $T_W$, $W_C$; $d_1$,..., $d_{150}$) empfängt, die einen Webzustand des Webstuhls darstellen, eine Berechnungseinrichtung (30), die ein Berechnungsergebnis ($O_1$,..., $O_6$; $O_1$,..., $O_n$; $O_1$,..., $O_2$) entsprechend einer Gesamtsumme von Produkten erzeugt, wobei jedes Produkt einen Wert ($I_1$,..., $I_{15}$; $I_1$,..., $I_{101}$; $I_1$,..., $I_{12}$; $I_1$,..., $I_{150}$) eines Parameters der Vielzahl von Parametern und ein dazugehöriges Gewicht einer Vielzahl von Gewichten ($W_{(1,1)}$,..., $W_{(15,15)}$; $W_{(1,1)}$,..., $W_{(15,101)}$; $W_{(1,1)}$..., $W_{(15,12)}$; $W_{(1,1)}$,..., $W_{(30,150)}$) umfasst, und

eine Einrichtung, die das Berechnungsergebnis als ein Ausgangssignal ausgibt.

**2.** System nach Anspruch 1, wobei:
die Neuronennetz-Steuereinrichtung so ausgelegt ist, dass das Ausgangssignal einen kritischen Grad des Auftretens von Störungen darstellt.

**3.** System nach Anspruch 1 oder 2, das des Weiteren umfasst:
eine Einrichtung (2, 4, 14, 21; 2, 4, 12, 14, 16, 21; 8, 10, 12, 18, 23), die den Webzustand entsprechend dem Ausgangssignal ändert.

**4.** System nach einem der Ansprüche 1 bis 3, das des Weiteren umfasst:
eine Einrichtung (22), die ein Warnsignal entsprechend dem Ausgangssignal ausgibt.

**5.** System nach einem der Ansprüche 1 bis 4, wobei:

die Parameter in die Neuronennetz-Steuereinrichtung eingegeben werden, bevor das Weben beginnt; und

der Webzustand entsprechend dem Ausgangssignal eingestellt wird, wenn das Weben beginnt.

**6.** System nach einem der Ansprüche 1 bis 5, wobei der Webzustand ein Schussschlagzustand ist.

**7.** Verfahren nach einem der Ansprüche 1 bis 6, wobei:

das System des Weiteren umfasst:

eine Aufnehmereinrichtung (49), die ein Bild eines Schussgams (Y) bei einem Schussschlag aufnimmt; und

wobei die Parameter dem Bild entsprechen.

**8.** System nach Anspruch 7, wobei:
die Bildaufnehmereinrichtung (49) ein CCD-Sensor ist, der das Schussgarn (Y) beim Abtasten in einer Richtung erfasst, die einen Weg durchläuft, auf dem das Schussgarn (Y) fliegt.

**9.** System nach einem der Ansprüche 1 bis 8, wobei:
das System des Weiteren umfasst:

eine Einrichtung (29), die eine Signalwellenform digitalisiert, die das Verhalten eines Schussgarns (Y) darstellt und von einem Schussfühler (18) erfasst wird, bis das Schussgarn (Y) in Kettgarnen (W) verwoben ist; und

wobei die Parameter Werte haben, die anhand der Signalwellenform bestimmt werden.

**10.** System nach Anspruch 9, wobei:

die Parameter der Signalwellenform entsprechen; und

das System des Weiteren umfasst:

eine Einrichtung, die die Signalwellenform in einem normalen Zustand von der Signalwellenform in einem abnormalen Zustand entsprechend dem Berechnungsergebnis unterscheidet.

**11.** System nach Anspruch 9 oder 10, wobei;
der Schussfühler (18) ein fotoelektrischer Schusseinzugssensor ist.

**12.** System nach einem der Ansprüche 1 bis 11, das des Weiteren umfasst:
eine Einrichtung (20), die wenigstens einen Parameter der Vielzahl von Parametern von einer Person empfängt.

**13.** System nach einem der Ansprüche 1 bis 12, wobei:
das System wenigstens einen Parameter der Vielzahl von Parametern von einem Hauptcomputer empfängt.

**14.** System nach einem der Ansprüche 1 bis 13, wobei:
die Neuronennetz-Steuereinrichtung des Weiteren umfasst:
eine Lerneinrichtung, die die Vielzahl von Gewichten an Webzustände des Webstuhls anpasst.

**15.** System nach Anspruch 14, wobei:
die Lerneinrichtung für ein Eingangsmuster, das einen bestimmten Satz von Werten für die Vielzahl von Parametern umfasst, ein entsprechendes Berechnungsergebnis berechnet, das entsprechende Berechnungsergebnis mit einem Sollmuster vergleicht, das dem Eingangsmuster entspricht und einen Satz von Sollwerten ($T_1,..., T_6$; $T_1,...,$

$T_n$; $T_1$,..., $T_2$) für das Ausgangssignal umfasst, und Gewichte der Vielzahl von Gewichten auf der Grundlage des Vergleichs unter Verwendung einer Lernregel ändert.

**16.** System nach Anspruch 14 oder 15, wobei:
die Lemeinrichtung eine Fehler-Backpropagation-Lernregel zum Anpassen der Vielzahl von Gewichten verwendet.

**17.** Verfahren zum Betreiben eines System zum Steuern eines Webstuhls, wobei das System eine Neuronennetz-Steuereinrichtung umfasst und das Verfahren umfasst:

Empfangen einer Vielzahl von Parametem ($K_{Y1}$, $K_{Y2}$, $P_{S1}$, $P_{S2}$, $S_Y$, $T_{CO}$, $T_{F1}$, $T_I$, $T_O$, $T_W$, $T_{WF}$, $T_{Y1}$, $T_{Y2}$, $T_{Y3}$, $W_C$; $d_{(1,1)}$,..., $d_{(11,9)}$, $R_{PM}$, $W_C$; $K_{Y1}$, $L_W$, $P_{S1}$, $P_{S2}$, $R_{PM}$, $S_Y$, $T_{CO}$, $T_{F1}$, $T_I$, $T_O$, $T_W$, $W_C$; $d_1$,..., $d_{150}$), die einen Webzustand des Webstuhls darstellen,

Erzeugen eines Berechnungsergebnisses ($O_1$,..., $O_6$; $O_1$,..., $O_n$; $O_1$,..., $O_2$) entsprechend einer Gesamtsumme von Produkten, wobei jedes Produkt einen Wert ($I_1$,..., $I_{15}$; $I_1$,..., $I_{101}$; $I_1$,..., $I_{12}$; $I_1$,..., $I_{150}$) eines Parameters der Vielzahl von Parametern und ein dazugehöriges Gewicht einer Vielzahl von Gewichten ($W_{(1,1)}$,..., $W_{(15,15)}$; $W_{(1,1)}$,..., $W_{(15,101)}$; $W_{(1,1)}$..., $W_{(15,12)}$; $W_{(1,1)}$,..., $W_{(30,150)}$) umfasst, und

Ausgeben des Berechnungsergebnisses als ein Ausgangssignal.

**18.** Verfahren nach Anspruch 17, wobei:
die Neuronennetz-Steuereinrichtung so ausgeführt ist, dass das Ausgangssignal einen kritischen Grad des Auftretens von Störungen darstellt.

**19.** Verfahren nach Anspruch 17 oder 18, das des Weiteren umfasst:
Ändern des Webzustandes entsprechend dem Ausgangssignal.

**20.** Verfahren nach einem der Ansprüche 17 bis 19, das des Weiteren umfasst:
Ausgeben eines Warnsignals entsprechend dem Ausgangssignal.

**21.** Verfahren nach einem der Ansprüche 17 bis 20, wobei:

die Parameter in die Neuronennetz-Steuereinrichtung eingegeben werden, bevor das Weben beginnt; und

der Webzustand entsprechend dem Ausgangssignal eingestellt wird, wenn das Weben beginnt.

**22.** Verfahren nach einem der Ansprüche 17 bis 21, wobei:
der Webzustand ein Schussschlagzustand ist.

**23.** Verfahren nach einem der Ansprüche 17 bis 22, wobei:
das Verfahren des Weiteren umfasst:

Aufnehmen eines Bildes eines Schussgarns (Y) bei einem Schussschlag mit einer Bildaufnehmereinrichtung (49); und

wobei die Parameter dem Bild entsprechen.

**24.** Verfahren nach Anspruch 23, wobei:
die Bildaufnehmereinrichtung (49) ein CCD-Sensor ist, der das Schussgarn (Y) beim Abtasten in einer Richtung erfasst, die einen Weg durchläuft, auf dem das Schussgarn (Y) fliegt.

**25.** Verfahren nach einem der Ansprüche 17 bis 24, wobei:
das Verfahren des Weiteren umfasst:

Digitalisieren einer Signalwellenform, die das Verhalten eines Schussgarns (Y) darstellt und von einem Schussfühler (18) erfasst wird, bis das Schussgarn (Y) in Kettgarne (W) verwoben ist; und

die Parameter Werte haben, die anhand der Signalwellenform bestimmt werden.

**26.** Verfahren nach Anspruch 25, wobei:

die Parameter der Signalwellenform entsprechen; und

das Verfahren des Weiteren umfasst:

Unterscheiden der Signalwellenform in einem normalen Zustand von der Signalwellenform in einem abnormalen Zustand entsprechend dem Berechnungsergebnis.

**27.** Verfahren nach Anspruch 25 oder 26, wobei:
der Schussfühler (18) ein fotoelektrischer Schusseinzugsensor ist.

**28.** Verfahren nach einem der Ansprüche 17 bis 27, das des Weiteren umfasst:
Empfangen wenigstens eines Parameters der Vielzahl von Parametern von einer Person.

**29.** Verfahren nach einem der Ansprüche 17 bis 28, das des Weiteren umfasst:
Empfangen wenigstens eines Parameters der Vielzahl von Parametern von einem Hauptcomputer.

**30.** Verfahren nach einem der Ansprüche 17 bis 29, das des Weiteren umfasst:
Anpassen der Vielzahl von Gewichten an Webzustände des Webstuhls.

**31.** Verfahren nach Anspruch 30, das des Weiteren umfasst:

für ein Eingangsmuster, das einen bestimmten Satz von Werten für die Vielzahl von Parametern umfasst, Berechnen eines entsprechenden Berechnungsergebnisses;

Vergleichen des entsprechenden Berechnungsergebnissees mit einem Sollmuster, das dem Eingangsmuster entspricht und einen Satz von Sollwerten ($T_1$,..., $T_6$; $T_1$,..., $T_n$; $T_1$,..., $T_2$) für das Ausgangssignal umfasst; und

Ändern von Gewichten der Vielzahl von Gewichten auf der Grundlage des Vergleichs unter Verwendung einer Lernregel.

**32.** Verfahren nach Anspruch 30 oder 31, wobei:
bei dem Verfahren eine Fehier-Backpropagation-Lernregel zum Anpassen der Vielzahl von Gewichten verwendet wird.

**Revendications**

**1.** Système pour commander un métier à tisser, comprenant :

un moyen de commande à réseau neuronal comprenant :

un moyen d'entrée de l'état du tissage pour recevoir une pluralité de paramètres ($K_{Y1}$, $K_{Y2}$, $P_{S1}$, $P_{S2}$, $S_Y$, $T_{CO1}$, $T_{F1}$, $T_I$, $T_O$, $T_W$, $T_{WF}$, $T_{Y1}$, $T_{Y2}$, $T_{Y3}$, $W_C$ ; $d_{(1,1)}$,... $d_{(11,9)}$, $R_{PM}$, $W_C$ ; $K_{Y1}$, $L_W$, $P_{S1}$, $P_{S2}$, $R_{PM}$, $S_Y$, $T_{CO1}$, $T_{F1}$, $T_I$, $T_O$, $T_W$, $W_C$ ; $d_1$, ⁙, $d_{150}$) représentant une situation de tissage dudit métier à tisser ;
un moyen de calcul (30) pour créer un résultat du calcul ($O_1$, ⁙, $O_6$ ; $O_1$, ⁙, $O_n$ ; $O_1$, ⁙, $O_2$) en fonction d'une somme totale de produits, chaque produit comprenant une valeur ($I_1$, ⁙, $I_{15}$ ; $I_1$, ⁙, $I_{101}$ ; $I_1$, ⁙, $I_{12}$ ; $I_1$, ⁙, $I_{150}$) d'un paramètre parmi ladite pluralité de paramètres, et une pondération associée parmi une pluralité de pondérations ($W_{(1,1)}$, ⁙, $W_{(15,15)}$ ; $W_{(1,1)}$, ⁙, $W_{(15,101)}$ ; $W_{(1,1)}$, ⁙, $W_{(15,12)}$ ; $W_{(1,1)}$, ⁙, $W_{(30,150)}$) et un moyen pour délivrer ledit résultat du calcul en tant que signal de sortie.

**2.** Système selon la revendication 1, dans lequel ledit moyen de commande à réseau neuronal est adapté de telle sorte que ledit signal de sortie représente un degré critique d'apparition de perturbations.

**3.** Système selon la revendication 1 ou 2, comprenant en outre des moyens (2, 4, 14, 21 ; 2, 4, 12, 14, 16, 21 ; 8, 10, 12, 18, 23) pour modifier la situation de tissage en fonction dudit signal de sortie.

**4.** Système selon l'une des revendications 1 à 3, comprenant en outre un moyen (22) pour délivrer un signal d'alarme en accord avec ledit signal de sortie.

**5.** Système selon l'une des revendications 1 à 4, dans lequel lesdits paramètres sont introduits dans ledit moyen de commande à réseau neuronal avant que commence le tissage ; et
   ladite situation de tissage est réglée en accord avec ledit signal de sortie lorsque ledit tissage commence.

**6.** Système selon l'une des revendications 1 à 5, dans lequel ladite situation de tissage est une situation de saisie de duite.

**7.** Système selon l'une des revendications 1 à 6, dans lequel ledit système comprend en outre des moyens de saisie (49) pour saisir une image d'un fil de trame (Y) lors de la saisie d'une duite ; et lesdits paramètres correspondent à ladite image.

**8.** Système selon la revendication 1, dans lequel ledit moyen de saisie d'image (49) est un capteur à CCD adapté pour détecter ledit fil de trame (Y) par balayage dans une direction transversale au parcours que suit ledit fil de trame (Y).

**9.** Système selon l'une des revendications 1 à 8, dans lequel ledit système comprend en outre un moyen (29) pour numériser une forme d'onde de signal représentant le comportement d'un fil de trame (Y) et détecté par sonde de trame (18), jusqu'à ce que les fils de trame (Y) soient tissés dans les fils de chaîne (W), et lesdits paramètres ont des valeurs qui sont obtenues à partir de ladite forme d'onde du signal.

**10.** Système selon la revendication 9, dans lequel lesdits paramètres correspondent à ladite forme d'onde du signal, et ledit système comprend en outre des moyens pour distinguer ladite forme d'onde du signal à un état normal et ladite forme d'onde du signal à un état anormal en fonction dudit résultat du calcul.

**11.** Système selon la revendication 9 ou 10, dans lequel ladite sonde de trame (18) est un capteur photoélectrique de fil de trame.

**12.** Système selon l'une des revendications 1 à 11, comprenant en outre un moyen (20) pour recevoir d'une personne au moins un paramètre parmi ladite pluralité de paramètres.

**13.** Système selon l'une des revendications 1 à 12, dans lequel ledit système reçoit d'un ordinateur hôte au moins un paramètre parmi ladite pluralité de paramètres.

**14.** Système selon l'une des revendications 1 à 13, dans lequel ledit moyen de commande à réseau neuronal comprend en outre des moyens d'apprentissage pour adapter ladite pluralité de pondérations aux états du tissage dudit métier à tisser.

**15.** Système selon la revendication 14, dans lequel ledit moyen d'apprentissage calcule pour un motif d'entrée comprenant un ensemble particulier de valeurs de ladite pluralité de paramètres un résultat de calcul correspondant, compare ledit résultat de calcul correspondant à un motif cible correspondant audit motif d'entrée et comprenant un ensemble de valeurs cibles ($T_1$, ▩, $T_6$ ; $T_1$, ▩, $T_n$ ; $T_1$, ▩, $T_2$) pour ledit signal de sortie, et modifie les pondérations de ladite pluralité de pondérations sur base de ladite comparaison en utilisant une règle d'apprentissage.

**16.** Système selon la revendication 14 ou 15, dans lequel ledit moyen d'apprentissage utilise une règle d'apprentissage à propagation d'erreur vers l'arrière pour adapter ladite pluralité de pondérations.

**17.** Procédé d'utilisation d'un système pour commander un métier à tisser, ledit système comprenant un moyen de commande à réseau neuronal, ledit procédé comprenant les étapes consistant à :

   recevoir une pluralité de paramètres ($K_{Y1}$, $K_{Y2}$, $P_{S1}$, $P_{S2}$, $S_Y$, $T_{CO1}$, $T_{F1}$, $T_I$, $T_O$, $T_W$, $T_{WF}$, $T_{Y1}$, $T_{Y2}$, $T_{Y3}$, WC ; $d_{(1,1)},...$, $d_{(11,9)}$, $R_{PM}$, $W_C$ ; $K_{Y1}$, $L_W$, $P_{S1}$, $P_{S2}$, $R_{PM}$, $S_Y$, $T_{CO1}$, $T_{F1}$, $T_I$, $T_O$, $T_W$, $W_C$ ; $d_{(1,}$ ▩, $d_{150})$ représentant une situation de tissage dudit métier à tisser ;
   créer un résultat du calcul ($O_1$, ▩, $O_6$ ; $O_1$, ▩, $O_n$ ; $O_1$, ▩, $O_2$) en fonction d'une somme totale de produits, chaque produit comprenant une valeur ($I_1$, ▩, $I_{15}$ ; $I_1$, ▩, $I_{101}$ ; $I_1$, ▩, $I_{12}$ , $I_1$, ▩, $I_{150}$) d'un paramètre parmi ladite pluralité de paramètres, et une pondération associée parmi une pluralité de pondérations ($W_{(1,1)}$, ▩,

$W_{(15,15)}$ $W_{(1,1)}$ &#x2593;, $W_{(15,101)}$ ; $W_{(1,1)}$, &#x2593;, $W_{(15,12)}$ ; $W_{(1,1)}$, &#x2593;. $W_{(30,150)}$) et
délivrer ledit résultat du calcul en tant que signal de sortie.

**18.** Procédé selon la revendication 17, dans lequel ledit moyen de commande à réseau neuronal est adapté de telle sorte que ledit signal de sortie représente un degré critique d'apparition de perturbations.

**19.** Procédé selon la revendication 17 ou 18, comprenant en outre l'étape consistant à modifier la situation de tissage en fonction dudit signal de sortie.

**20.** Procédé selon l'une des revendications 17 à 19, comprenant en outre l'étape consistant à délivrer un signal d'alarme en accord avec ledit signal de sortie.

**21.** Procédé selon l'une des revendications 17 à 20, dans lequel lesdits paramètres sont introduits dans ledit moyen de commande à réseau neuronal avant que commence le tissage ; et
ladite situation de tissage est réglée en accord avec ledit signal de sortie lorsque ledit tissage commence.

**22.** Procédé selon l'une des revendications 17 à 21, dans lequel ladite situation de tissage est une situation de saisie de duite.

**23.** Procédé selon l'une des revendications 17 à 22, dans lequel ledit procédé comprend en outre l'étape consistant à saisir une image d'un fil de trame (Y) lors de la saisie d'une duite ; et lesdits paramètres correspondent à ladite image.

**24.** Procédé selon la revendication 23, dans lequel ledit moyen de saisie d'image (49) est un capteur à CCD adapté pour détecter ledit fil de trame (Y) par balayage dans une direction transversale au parcours que suit ledit fil de trame (Y).

**25.** Procédé selon l'une des revendications 17 à 24, dans lequel ledit procédé comprend en outre l'étape consistant à numériser une forme d'onde de signal représentant le comportement d'un fil de trame (Y) et détecté par sonde de trame (18), jusqu'à ce que les fils de trame (Y) soient tissés dans les fils de chaîne (W), et lesdits paramètres ont des valeurs qui sont obtenues à partir de ladite forme d'onde du signal.

**26.** Procédé selon la revendication 25, dans lequel lesdits paramètres correspondent à ladite forme d'onde du signal, et ledit procédé comprend en outre l'étape consistant à distinguer ladite forme d'onde du signal à un état normal de ladite forme d'onde du signal à un état anormal en fonction dudit résultat du calcul.

**27.** Procédé selon la revendication 25 ou 26, dans lequel ladite sonde de trame (18) est un capteur photoélectrique de fil de trame.

**28.** Procédé selon l'une des revendications 17 à 27, comprenant en outre l'étape consistant à recevoir d'une personne au moins un paramètre parmi ladite pluralité de paramètres.

**29.** Procédé selon l'une des revendications 17 à 28, comprenant en outre l'étape consistant à recevoir d'un ordinateur hôte au moins un paramètre parmi ladite pluralité de paramètres.

**30.** Procédé selon l'une des revendications 17 à 29, comprenant en outre l'étape consistant à adapter ladite pluralité de pondérations aux états du tissage dudit métier à tisser.

**31.** Procédé selon la revendication 30, comprenant en outre les étapes consistant à

calculer pour un motif d'entrée comprenant un ensemble particulier de valeurs de ladite pluralité de paramètres un résultat de calcul correspondant,
comparer ledit résultat de calcul correspondant à un motif cible correspondant audit motif d'entrée et comprenant un ensemble de valeurs cibles ($T_1$, &#x2593;, $T_6$ ; $T_1$, &#x2593;, $T_n$ ; $T_1$, &#x2593;, $T_2$) pour ledit signal de sortie, et
modifier les pondérations de ladite pluralité de pondérations sur base de ladite comparaison en utilisant une règle d'apprentissage.

**32.** Procédé selon la revendication 30 ou 31, dans lequel ledit procédé utilise une règle d'apprentissage à propagation d'erreur vers l'arrière pour adapter ladite pluralité de pondérations.

# FIG.1

WEAVING TROUBLE
PREDICTING DEVICE

WEAVING
CONDITION
INPUT
MEANS

CRITICAL
DEGREE
CALCULATING
MEANS
(NEURAL
NETWORK)

CHANGE-
CONTROLLING
MEANS

# FIG.2

ORIGINAL PRESSURE

SOLENOID CONTROLLER

OPEN-CLOSE TIMING DATA

WEFT PICKING CONTROLLER

MAN-MACHINE INTERFACE

WEAVING WIDTH, FABRIC TEXTURE, WEFT YARN KIND, WEFT YARN THICKNESS, WARP YARN TENSION ETC.

WARNING DEVICE

EP 0 573 656 B1

EP 0 573 656 B1

FIG.3

INPUT

$W_C$ (WEAVING WIDTH)
$P_{S1}$ (FABRIC TEXTURE-SYMMETRICAL)
$P_{S2}$ (FABRIC TEXTURE-ASYMMETRICAL)
$K_{Y1}$ (WEFT YARN KIND-S)
$K_{Y2}$ (WEFT YARN KIND-F)
$S_Y$ (WEFT YARN THICKNESS)
$T_W$ (WARP YARN TENSION)
$T_{CO}$ (MEASURING PIN WITHDRAWAL TIMING)
$T_O$ (WARP YARN WITHDRAWAL TIMING)
$T_I$ (WARP YARN ENTERING TIMING)
$T_{F1}$ (WEFT YARN REACHING TIMING)
$T_{Y1}$ (1ST TURN UNWINDING TIMING)
$T_{Y2}$ (2ND TURN UNWINDING TIMING)
$T_{Y3}$ (3RD TURN UNWINDING TIMING)
$T_{WF}$ (WEFT YARN FLIGHT TENSION)

$I_1$, $I_2$, $I_3$, $I_4$, $I_5$, $I_6$, $I_7$, $I_8$, $I_9$, $I_{10}$, $I_{11}$, $I_{12}$, $I_{13}$, $I_{14}$, $I_{15}$

$W_{1\cdot1}$, $W_{1\cdot2}$, $W_{1\cdot3}$, $W_{15\cdot14}$, $W_{15\cdot15}$

$H_1$, $H_2$, $H_3$, $H_4$, $H_5$, $H_6$, $H_7$, $H_8$, $H_9$, $H_{10}$, $H_{11}$, $H_{12}$, $H_{13}$, $H_{14}$, $H_{15}$

OPERATING EXAMPLE OF $H_1$

$V_{1\cdot1}$, $V_{2\cdot2}$, $V_{6\cdot15}$

$O_1$, $O_2$, $O_3$, $O_4$, $O_5$, $O_6$

OPERATING EXAMPLE OF $O_6$

SUM OF INPUT PRODUCTS+OFFSET $(\Sigma W_{1i} I_i) + \theta_1$

RESPONSE FUNCTION PROCESSING

$H_1$ — 1, 0.5, 0, Y

Y

OUTPUT

$O_1$ (GOOD STATE)
$O_2$ (CRITICAL DEGREE OF BREAKAGE UPON EJECTION)
$O_3$ (CRITICAL DEGREE OF FAULTY SHEDDING OPERATION)
$O_4$ (CRITICAL DEGREE OF WEFT YARN AT BASE)
$O_5$ (CRITICAL DEGREE OF WEFT YARN TIP END ENTANGLED)
$O_6$ (CRITICAL DEGREE OF KINKY STATE)

TEACHER SIGNAL (ONLY DURING LEARNING)

$T_1$, $T_2$, $T_3$, $T_4$, $T_5$, $T_6$

SUM OF INPUT PRODUCTS+OFFSET $(\Sigma V_{6j} H_j) + \gamma_6$

RESPONSE FUNCTION PROCESSING

$O_6$ — 1, 0.5, 0, Z

Z

34

## FIG.4

INITIATE LEARNING

INITIATE COEFFICIENT OF COUPLING AND OFFSET
RANDOM NUMBERS → ($V_{kj}$, $W_{ji}$, $\gamma_k$, $\theta_j$) — S1

SET LEARNING PATTERN $I_i$
(SPECIFIC LOOM OPERATING CONDITION) — S2

MAKE OUTPUT CALCULATION OF $H_j$ UNIT
$H_j = f((\sum_i W_{ji} \cdot I_i) + \theta_j)$ — S3

MAKE OUTPUT CALCULATION OF $O_k$ UNIT
$O_k = f((\sum_j V_{kj} \cdot H_j) + \gamma_k)$ — S4

CALCULATE ERROR OF $O_k$ UNIT
$\delta_k = (T_k - O_k) \cdot O_k \cdot (1 - O_k)$ — S5

CALCULATE ERROR OF $H_i$ UNIT
$\sigma_j = \sum_k \delta_k \cdot V_{kj} \cdot H_j \cdot (1 - H_j)$ — S6

CORRECT COEFFICIENT OF COUPLING BETWEEN $H_j$ AND $O_k$
$V_{kj} = V_{kj} + a \cdot \delta_k \cdot H_j$ — S7

CORRECT OFFSET OF $O_k$
$\gamma_k = \gamma_k + \beta \cdot \delta_k$ — S8

CORRECT COEFFICIENT OF COUPLING BETWEEN $I_i$ AND $H_j$
$W_{ji} = W_{ji} + a \cdot \sigma_j \cdot I_i$ — S9

CORRECT OFFSET OF $H_j$
$\theta_j = \theta_j + \beta \cdot \sigma_j$ — S10

RENEW LEARNING PATTERN — S11

ARE ALL LEARNING PATTERNS COMPLETED ? — S12
NO

YES

RENEW REPEATED NUMBER OF LEARNING — S13

REPEATED NUMBER ≧ LIMIT NUMBER ? — S14
NO

YES

TERMINATE

# FIG.5

```
                    ┌──────────────┐
                    │   INITIATE   │
                    │  PROCESSING  │
                    └──────┬───────┘
                           │
              ┌────────────────────────┐
              │ MAKE MAXIMUM Ok        │ ╱S21
              │ DETECTION PROCESSING   │
              └────────────┬───────────┘
                           │
                     ╱S22  │
              ┌────────────────────────┐    YES
              │    GOOD STATE ?        │────────►
              │   O_MAX = O_1 ?        │
              └────────────┬───────────┘
                          NO
```

- S21: MAKE MAXIMUM Ok DETECTION PROCESSING
- S22: GOOD STATE ? $O_{MAX} = O_1$ ? — YES
- S23: TENDENCY OF YARN BREAKAGE UPON EJECTION ? $O_{MAX} = O_2$ ? — YES → S24: MAKE DISPLAY INDICATION, LIGHT WARNING LAMP
- S25: TENDENCY OF FAULTY SHEDDING OPERATION ? $O_{MAX} = O_3$ ? — YES → S26: MAKE DISPLAY INDICATION, LIGHT WARNING LAMP
- S27: TENDENCY OF YARN BREAKAGE AT BASE ? $O_{MAX} = O_4$ ? — YES → S28: MAKE DISPLAY INDICATION, LIGHT WARNING LAMP
- S29: TENDENCY OF WEFT YARN TIP END ENTANGLED ? $O_{MAX} = O_5$ ? — YES → S30: MAKE DISPLAY INDICATION, LIGHT WARNING LAMP
- S31: TENDENCY ONE-SIDED TO YARN BREAKAGE AT BASE OR TO WEFT YARN TIP END ENTANGLED ? $O_4 > O_5$ ? — $O_4$ → S32: MAKE DISPLAY INDICATION, LIGHT WARNING LAMP ; $O_5$ → S33: MAKE DISPLAY INDICATION, LIGHT WARNING LAMP

EP 0 573 656 B1

# FIG.6

INITIATE PROCESSING

MAKE MAXIMUM Ok DETECTION PROCESSING — S41

S42

GOOD STATE ? $O_{MAX}=O_1$ ? → YES

NO

S43

TENDENCY OF YARN BREAKAGE UPON EJECTION ? $O_{MAX}=O_2$ ? → YES

S44

$T_{MO}=T_{MO}+2$ [°]
$T_{SO}=T_{SO}+2$ [°]

NO

S45

TENDENCY OF FAULTY SHEDDING OPERATION ? $O_{MAX}=O_3$ ? → YES

S46

$T_{CO}=T_{CO}+2$ [°]

NO

S47

TENDENCY OF YARN BREAKAGE AT BASE ? $O_{MAX}=O_4$ ? → YES

S48

$P_S=P_S\times0.98$ [atg]
$T_{MC}=T_{MC}-2$ [°]

NO

S49

TENDENCY OF WEFT YARN TIP END ENTANGLED ? $O_{MAX}=O_5$ ? → YES

S50

$P_M=P_M\times1.05$ [atg]
$P_S=P_S\times1.05$ [atg]

NO

S51

TENDENCY ONE-SIDED TO YARN BREAKAGE AT BASE OR TO WEFT YARN TIP END ENTANGLED ? $O_4>O_5$ ? → $O_4$

S52

$T_{MC}=T_{MC}-2$ [°]
$T_{SC}=T_{SC}+2$ [°]

$O_5$

S53

$P_M=P_M\times1.05$ [atg]
$P_S=P_S\times1.05$ [atg]

# FIG.7

```
┌──────────┐     ┌──────────┐     ┌────────────────────┐     ┌──────────┐
│WEFT YARN │     │  DATA    │ ──→ │ CRITICAL DEGREE    │ ──→ │ WARNING  │
│IMAGE     │ ──→ │INPUTTING │ ──→ │ CALCULATING        │ ──→ │ MEANS OR │
│PICKUP    │     │ MEANS    │ ──→ │ MEANS FOR EACH     │ ──→ │ WEFT     │
│MEANS     │     │          │ ──→ │ OF WEFT PICKING    │ ──→ │ PICKING  │
│          │     │          │ ──→ │ TROUBLE FACTORS    │ ──→ │CONDITION │
│          │     │          │ ──→ │ (NEURAL NETWORK)   │ ──→ │CHANGING  │
│          │     │          │ ──→ │                    │     │ MEANS    │
└──────────┘     └──────────┘     └────────────────────┘     └──────────┘
```

# FIG.8

SOLENOID
CONTROLLER

OPEN-CLOSE
TIMING DATA

WEFT PICKING
CONTROLLER

MAN-MACHINE
INTERFACE

WARNING
DEVICE

ORIGINAL
PRESSURE

# FIG.9

**(A)**

29 PICTURE ELEMENTS

35 PICTURE ELEMENTS

**(B)**

| 0 | 24 | 30 | 24 | 0 |
|---|----|----|----|---|
| 24 | 60 | 80 | 60 | 24 |
| 30 | 80 | 110 | 80 | 30 |
| 24 | 60 | 80 | 60 | 24 |
| 0 | 24 | 30 | 24 | 0 |

**(C)**

| 1 | 1 | 1 | 0 | 0 |
|---|---|---|---|---|
| 0 | 0 | 1 | 1 | 1 |
| 0 | 0 | 0 | 0 | 0 |
| 0 | 0 | 0 | 0 | 0 |
| 0 | 0 | 0 | 0 | 0 |

(xs, ys)

**(D)**

**(E)**

DENSITY VALUE

- · : 100~199
- ■ : 200~299
- ■ : 300~399
- ■ : 400

FIG.10

INPUT
WEAVING WIDTH
REVOLUTION SPEED

DENSITY VALUE OF
WEFT YARN IMAGE

$I_1$ $I_2$ $I_3$ $I_4$ $I_5$ $I_6$ $I_7$ $I_8$ $I_9$ $I_{10}$ $I_{11}$ ... $I_{100}$ $I_{101}$

$W_{1 \cdot 1}$ $W_{1 \cdot 2}$ $W_{1 \cdot 3}'$ ... $W_{15 \cdot 100}$ $W_{15 \cdot 101}$

$H_1$ $H_2$ $H_3$ $H_4$ $H_5$ $H_6$ $H_7$ $H_8$ $H_9$ $H_{10}$ $H_{11}$ $H_{12}$ $H_{13}$ $H_{14}$ $H_{15}$

OPERATING EXAMPLE OF $H_1$

$V_{1 \cdot 1}$ $V_{1 \cdot 2}$ $V_{6 \cdot 15}$

SUM OF INPUT PRODUCTS+OFFSET
$( \Sigma W_{1 i} I_i ) + \theta_1$

Y

RESPONSE FUNCTION PROCESSING

$H_1$

1
0.5
0

Y

$H_1$

TEACHER SIGNAL
(ONLY DURING LEARNING)

OUTPUT

$O_1$ → $O_1$ (GOOD STATE) ← $T_1$

$O_2$ → $O_2$ (CRITICAL DEGREE OF BREAKAGE UPON EJECTION) ← $T_2$

$O_3$ → $O_3$ (CRITICAL DEGREE OF FAULTY SHEDDING OPERATION) ← $T_3$

$O_4$ → $O_4$ (CRITICAL DEGREE OF WEFT YARN AT BASE) ← $T_4$

$O_5$ → $O_5$ (CRITICAL DEGREE OF WEFT YARN TIP END ENTANGLED) ← $T_5$

$O_6$ → $O_6$ (CRITICAL DEGREE OF KINKY STATE) ← $T_6$

OPERATING EXAMPLE OF $O_6$

SUM OF INPUT PRODUCTS+OFFSET
$( \Sigma V_{6 j} H_j ) + \gamma_6$

Z

RESPONSE FUNCTION PROCESSING

$O_6$

1
0.5
0

Z

$O_6$

EP 0 573 656 B1

41

# FIG.11

**(A)**

**(B)**

**(C)**

**(D)**

**FIG.12**

INITIATE LEARNING

INITIATE COEFFICIENT OF COUPLING AND OFFSET RANDOM NUMBERS → ( $V_{kj}$, $W_{ji}$, $\gamma_k$, $\theta_j$ )　　$S1$

SET LEARNING PATTERN li (SPECIFIC LOOM OPERATING CONDITION)　　$S2$

MAKE OUTPUT CALCULATION OF Hj UNIT
$H_j = f(( \sum_i W_{ji} \cdot I_i) + \theta_j)$　　$S3$

MAKE OUTPUT CALCULATION OF Ok UNIT
$O_k = f(( \sum_j V_{kj} \cdot H_j) + \gamma_k)$　　$S4$

CALCULATE ERROR OF Ok UNIT
$\delta_k = (T_k - O_k) \cdot O_k \cdot (1 - O_k)$　　$S5$

CALCULATE ERROR OF Hi UNIT
$\sigma_j = \sum_k \delta_k \cdot V_{kj} \cdot H_j \cdot (1 - H_j)$　　$S6$

CORRECT COEFFICIENT OF COUPLING BETWEEN Hj AND Ok
$V_{kj} = V_{kj} + \alpha \cdot \delta_k \cdot H_j$　　$S7$

CORRECT OFFSET OF Ok
$\gamma_k = \gamma_k + \beta \cdot \delta_k$　　$S8$

CORRECT COEFFICIENT OF COUPLING BETWEEN Ii AND Hj
$W_{ji} = W_{ji} + \alpha \cdot \sigma_j \cdot I_i$　　$S9$

CORRECT OFFSET OF Hj
$\theta_j = \theta_j + \beta \cdot \sigma_j$　　$S10$

RENEW LEARNING PATTERN　　$S11$

ARE ALL LEARNING PATTERNS COMPLETED ?　　$S12$
NO

YES

RENEW REPEATED NUMBER OF LEARNING　　$S13$

REPEATED NUMBER ≧ LIMIT NUMBER ?　　$S14$
NO

YES

TERMINATE

# FIG. 13

INITIATE PROCESSING

MAKE MAXIMUM Ok DETECTION PROCESSING — S21

S22

GOOD STATE ?
$O_{MAX} = O_1$ ? —— YES

NO

S23

TENDENCY OF YARN BREAKAGE UPON EJECTION ?
$O_{MAX} = O_2$ ? —— YES —— MAKE DISPLAY INDICATION, LIGHT WARNING LAMP  S24

NO

S25

TENDENCY OF FAULTY SHEDDING OPERATION ?
$O_{MAX} = O_3$ ? —— YES —— MAKE DISPLAY INDICATION, LIGHT WARNING LAMP  S26

NO

S27

TENDENCY OF YARN BREAKAGE AT BASE ?
$O_{MAX} = O_4$ ? —— YES —— MAKE DISPLAY INDICATION, LIGHT WARNING LAMP  S28

NO

S29

TENDENCY OF WEFT YARN TIP END ENTANGLED ?
$O_{MAX} = O_5$ ? —— YES —— MAKE DISPLAY INDICATION, LIGHT WARNING LAMP  S30

NO

S31

TENDENCY ONE-SIDED TO YARN BREAKAGE AT BASE OR TO WEFT YARN TIP END ENTANGLED ?
$O_4 > O_5$ ? —— $O_4$ —— MAKE DISPLAY INDICATION, LIGHT WARNING LAMP  S32

$O_5$

MAKE DISPLAY INDICATION, LIGHT WARNING LAMP  S33

# FIG.14

```
        ┌──────────────┐
        │   INITIATE   │
        │  PROCESSING  │
        └──────┬───────┘
               │
        ┌──────▼───────────┐
        │ MAKE MAXIMUM Ok  │  S41
        │DETECTION PROCESSING│
        └──────┬───────────┘
               │            S42
        ┌──────▼───────┐
        │ GOOD STATE ? │    YES
        │ O_MAX = O_1 ?│──────►
        └──────┬───────┘
               │ NO
```

**S41** MAKE MAXIMUM Ok DETECTION PROCESSING

**S42** GOOD STATE ? $O_{MAX} = O_1$ ? — YES

**S43** TENDENCY OF YARN BREAKAGE UPON EJECTION ? $O_{MAX} = O_2$ ? — YES

**S44**
$$T_{MO} = T_{MO} + 2 \; [°]$$
$$T_{SO} = T_{SO} + 2 \; [°]$$

**S45** TENDENCY OF FAULTY SHEDDING OPERATION ? $O_{MAX} = O_3$ ? — YES

**S46**
$$T_{CO} = T_{CO} + 2 \; [°]$$

**S47** TENDENCY OF YARN BREAKAGE AT BASE ? $O_{MAX} = O_4$ ? — YES

**S48**
$$P_S = P_S \times 0.98 \; [atg]$$
$$T_{MC} = T_{MC} - 2 \; [°]$$

**S49** TENDENCY OF WEFT YARN TIP END ENTANGLED ? $O_{MAX} = O_5$ ? — YES

**S50**
$$P_M = P_M \times 1.05 \, [atg]$$
$$P_S = P_S \times 1.05 \, [atg]$$

**S51** TENDENCY ONE-SIDED TO YARN BREAKAGE AT BASE OR TO WEFT YARN TIP END ENTANGLED ? $O_4 > O_5$ ? — $O_4$

**S52**
$$T_{MC} = T_{MC} - 2 \; [°]$$
$$T_{SC} = T_{SC} + 2 \; [°]$$

$O_5$

**S53**
$$P_M = P_M \times 1.05 \, [atg]$$
$$P_S = P_S \times 1.05 \, [atg]$$

# FIG.15

WEAVING CONDITION INPUTTING MEANS

CONTROL AMOUNT CALCULATING MEANS (NEURAL NETWORK)

CONTROL AMOUNT SETTING MEANS

# FIG.16

ORIGINAL PRESSURE

SOLENOID CONTROLLER

OPEN-CLOSE TIMING DATA

WEFT PICKING CONTROLLER

INDICATING DEVICE

MAN-MACHINE INTERFACE

WEAVING WIDTH, FABRIC TEXTURE, WEFT YARN KIND, WEFT YARN THICKNESS, WARP YARN TENSION ETC.

EP 0 573 656 B1

# FIG.17

INPUT

$W_C$ (WEAVING WIDTH) → $I_1$

$R_{PM}$ (REVOLUTION SPEED) → $I_2$

$P_{S1}$ (FABRIC TEXTURE-SYMMETRICAL) → $I_3$

$P_{S2}$ (FABRIC TEXTURE-ASYMMETRICAL) → $I_4$

$K_{Y1}$ (WEFT YARN KIND S, F) → $I_5$

$S_Y$ (WEFT YARN THICKNESS) → $I_6$

$T_W$ (WEFT YARN TENSION) → $I_7$

$T_{CO}$ (PIN WITHDRAWAL TIMING) → $I_8$

$T_O$ (WARP YARN WITHDRAWAL TIMING) → $I_9$

$T_1$ (WARP YARN ENTERING TIMING) → $I_{10}$

$T_{F1}$ (WEFT YARN REACHING TIMING) → $I_{11}$

$L_W$ (WEFT YARN SLACKNESS AMOUNT) → $I_{12}$

$W_{1·1}$  $W_{1·2}$  $W_{1·3}$

$H_1$ $H_2$ $H_3$ $H_4$ $H_5$ $H_6$ $H_7$ $H_8$ $H_9$ $H_{10}$ $H_{11}$ $H_{12}$ $H_{13}$ $H_{14}$ $H_{15}$

$V_{1·1}$  $V_{2·2}$  $V_{n·15}$

OPERATING EXAMPLE OF $H_1$

SUM OF INPUT PRODUCTS+OFFSET $(\Sigma W_{1i} I_i) + \theta_1$  Y

RESPONSE FUNCTION PROCESSING

$H_1$

1

0.5

0

Y

$H_1$

OUTPUT

$O_1$ → $O_1$ (MAIN PRESSURE)

$O_2$ → $O_2$ (SUB-PRESSURE)

$O_3$ → $O_3$ (MAIN EJECTION INITIATION TIMING)

$O_4$ → $O_4$ (MAIN EJECTION TERMINATION TIMING)

$O_5$ → $O_5$ (SUB-1 EJECTION INITIATION TIMING)

$O_6$ → $O_6$ (SUB-1 EJECTION TERMINATION TIMING)

$O_{n-1}$ → $O_{n-1}$

$O_n$ → $O_n$ (PIN WITHDRAWAL TIMING)

TEACHER SIGNAL (ONLY DURING LEARNING)

← $T_1$
← $T_2$
← $T_3$
← $T_4$
← $T_5$
← $T_6$

← $T_{n-1}$
← $T_n$

OPERATING EXAMPLE OF $O_n$

SUM OF INPUT PRODUCTS+OFFSET $(\Sigma V_{nj} H_j) + \gamma_n$  Z

RESPONSE FUNCTION PROCESSING

$O_n$

1

0.5

0

Z

$O_n$

**FIG.18**

$$\boxed{\text{INITIATE LEARNING}}$$

$\downarrow$

INITIATE COEFFICIENT OF COUPLING AND OFFSET
RANDOM NUMBERS $\rightarrow$ ( $V_{kj}$, $W_{ji}$, $\gamma_k$, $\theta_j$ ) — S1

$\downarrow$

SET LEARNING PATTERN $I_i$
(SPECIFIC LOOM OPERATING CONDITION) — S2

$\downarrow$

MAKE OUTPUT CALCULATION OF $H_j$ UNIT
$H_j = f((\sum_i W_{ji} \cdot I_i) + \theta_j)$ — S3

$\downarrow$

MAKE OUTPUT CALCULATION OF $O_k$ UNIT
$O_k = f((\sum_j V_{kj} \cdot H_j) + \gamma_k)$ — S4

$\downarrow$

CALCULATE ERROR OF $O_k$ UNIT
$\delta_k = (T_k - O_k) \cdot O_k \cdot (1 - O_k)$ — S5

$\downarrow$

CALCULATE ERROR OF $H_i$ UNIT
$\sigma_j = \sum_k \delta_k \cdot V_{kj} \cdot H_j \cdot (1 - H_j)$ — S6

$\downarrow$

CORRECT COEFFICIENT OF COUPLING BETWEEN $H_j$ AND $O_k$
$V_{kj} = V_{kj} + \alpha \cdot \delta_k \cdot H_j$ — S7

$\downarrow$

CORRECT OFFSET OF $O_k$
$\gamma_k = \gamma_k + \beta \cdot \delta_k$ — S8

$\downarrow$

CORRECT COEFFICIENT OF COUPLING BETWEEN $I_i$ AND $H_j$
$W_{ji} = W_{ji} + \alpha \cdot \sigma_j \cdot I_i$ — S9

$\downarrow$

CORRECT OFFSET OF $H_j$
$\theta_j = \theta_j + \beta \cdot \sigma_j$ — S10

$\downarrow$

RENEW LEARNING PATTERN — S11

$\downarrow$

ARE ALL LEARNING PATTERNS COMPLETED ? — S12 → NO

$\downarrow$ YES

RENEW REPEATED NUMBER OF LEARNING — S13

$\downarrow$

REPEATED NUMBER $\geq$ LIMIT NUMBER ? — S14 → NO

$\downarrow$ YES

$$\boxed{\text{TERMINATE}}$$

# FIG.19

EP 0 573 656 B1

# FIG.20

EP 0 573 656 B1

# FIG.21

**(A)** NORMAL WAVE-FORM

**(B)** WAVE-FORM DURING OCCURRENCE OF KINKY STATE